# EUROPEAN PATENT APPLICATION

(11) **EP 4 603 338 A1**
(43) Date of publication of application: **20.08.2025**
(21) Application number: 23881920.5
(22) Date of filing: 26.10.2023
(51) Int. Cl.: B60R 16/037

(54) **CABIN FUNCTION OPERATION METHOD AND RELATED DEVICE**

(30) Priority: 29.10.2022 CN 202211340797
(71) Applicant: Huawei Technologies Co., Ltd., Shenzhen, Guangdong 518129 (CN)
(72) Inventor: WANG, Xiyao, Shenzhen, Guangdong 518129 (CN)
(74) Representative: Isarpatent
(86) International application number: PCT/CN2023/126828
(87) International publication number: WO 2024/088345

(57) **Abstract**

A cockpit function operation method is provided. The method may be applied to a vehicle (100). The vehicle includes a steering wheel (103). A first button and a second button may be disposed on the steering wheel. In response to a first user operation on the first button, the vehicle may bind the second button to a first cockpit function. In response to a second user operation on the second button, the vehicle may control the first cockpit function. In response to a third user operation on the first button, the vehicle may switch a cockpit function bound to the second button from the first cockpit function to a second cockpit function. In response to a fourth user operation on the second button, the vehicle may control the second cockpit function. According to the method, a user may freely select a plurality of cockpit functions, and may set an arrangement sequence and control content of the cockpit functions, so that the user can use personalized and diversified cockpit functions without moving a line of sight away from the front and without moving a hand away from the steering wheel. A related apparatus is further included.

## Description

This application claims priority to Chinese Patent Application No. 202211340797.0, filed with the China National Intellectual Property Administration on October 29, 2022 and entitled "COCKPIT FUNCTION OPERATION METHOD AND RELATED APPARATUS", which is incorporated herein by reference in its entirety.

### TECHNICAL FIELD

This application relates to the field of vehicle technologies, and in particular, to a cockpit function operation method and a related apparatus.

### BACKGROUND

With development of vehicle intelligence, vehicles are no longer simple means of transportation, but also a "third living space" for users. An intelligent cockpit is an important part of vehicle intelligence. To meet increasingly diversified user requirements, cockpit functions are not limited to air conditioning and multimedia, and also applicable to more new application scenarios, to provide more user-friendly services for the users. How to help a user conveniently and quickly operate diversified cockpit functions has become a current problem to be resolved urgently.

### SUMMARY

This application provides a cockpit function operation method and a related apparatus. An electronic device may receive operations performed by a user on buttons on a steering wheel, and control a plurality of cockpit functions. For example, the electronic device may receive an operation performed by the user on a first button on the steering wheel, and bind a second button to an air conditioner function. Then, the user may control a control item in the air conditioner function by operating the second button. According to the foregoing method, the user can use diversified and modern cockpit functions without moving a line of sight away from the front and without moving a hand away from the steering wheel, to improve cockpit function use experience and driving safety of the user.

According to a first aspect, this application provides a cockpit function control method. The method may be applied to a vehicle. The vehicle includes a steering wheel. A first button and a second button may be disposed on the steering wheel. The vehicle may bind the second button to a first cockpit function in response to a first user operation on the first button. The vehicle may control the first cockpit function in response to a second user operation on the second button. The vehicle may switch, in response to a third user operation on the first button, a cockpit function bound to the second button from the first cockpit function to a second cockpit function. The vehicle may control the second cockpit function in response to a fourth user operation on the second button.

The first button and the second button on the steering wheel may be on a same side of the steering wheel. In this way, a user can operate the first button and the second button with one hand. The first button may be referred to as a mode switch button, and is configured to adjust the cockpit function bound to the second button. The second button may be referred to as a function operation button, and is configured to control the bound cockpit function.

It can be learned that the vehicle may bind the second button to different cockpit functions in response to the first user operation and the second user operation performed by the user on the first button. In this way, the vehicle can control the different cockpit functions. The first cockpit function may be a group travel function, and the second cockpit function may be a media playback control function. In this case, the first user operation may be an operation of switching a cockpit function bound to the first button to the group travel function. The third user operation may be an operation of switching the cockpit function bound to the first button from the group travel function to the media playback control function. The vehicle may bind the second button to the group travel function in response to the first user operation performed by the user on the first button. When receiving the second user operation on the second button, the vehicle may control the group travel function. In this way, the vehicle may switch, in response to the third user operation performed by the user on the first button, the cockpit function bound to the second button from the group travel function to the media playback control function. The vehicle may control the media playback control function in response to the fourth user operation on the second button. In this way, the user can use diversified cockpit functions by using only the first button and the second button on the steering wheel.

With reference to the first aspect, in some embodiments, the vehicle may display a first list on a display in response to the third user operation, and change a function option in a selected state in the first list from a first function option to a second function option. The first function option may indicate the first cockpit function, and the second function option may indicate the second cockpit function. The vehicle may display first information on the display in response to the fourth user operation.

The first information may be cockpit function information corresponding to the second cockpit function. The first information may indicate content for controlling the second cockpit function. A function option in the first list may be a switch control corresponding to a cockpit function. The first list may be a list including one or more switch controls. When the first cockpit function is the group travel function, and the second cockpit function is the media playback control function, the first function option may be a switch control corresponding to the group travel function, and the second function option may be a switch control corresponding to the media playback control function. The first information may be cockpit function information corresponding to the media playback control function. The cockpit function information corresponding to the media playback control function may include an artist name, a song name, and an album pattern of a song that is being played. In response to the third user operation, the vehicle may display, on the display, the switch control corresponding to the group travel function and the switch control corresponding to the media playback control function. In this way, the vehicle may change from selecting the group travel function to selecting the media playback control function on the display. The fourth user operation may be a roll up operation performed by the user on the second button. In response to the fourth user operation of the user, the first information may be displayed on the display to help the user control the media playback control function.

It may be understood that when the user operates the first button, the vehicle may determine that the user is switching the cockpit function bound to the second button. Further, the vehicle may display the first list on the display. The user may determine, by using a selected state of a cockpit function option in the first list, a specific cockpit function to which the user switches. When the user operates the second button, the vehicle may determine that the user needs to use the cockpit function to which the user switches. In this way, the vehicle may display the first information on the display, to help the user control the second cockpit function. In this way, the user may select a cockpit function option more quickly by using the display, and control the cockpit function.

With reference to the first aspect, in some embodiments, that the vehicle may control the second cockpit function in response to a fourth user operation on the second button specifically includes: The vehicle may control a first control item of the second cockpit function in response to the fourth user operation on the second button.

In some embodiments, the vehicle may control a second control item of the second cockpit function in response to a fifth user operation on the second button. A second operation manner of the fifth user operation is different from a first operation manner of the fourth user operation.

The second cockpit function may include a plurality of control items, and each control item may be used to control one or more parameters of the cockpit function. The control items may include but are not limited to a function of adjusting a cockpit function parameter value, a function of selecting an option, a start function, a stop function, and the like.

Specifically, when the second cockpit function is the media playback control function, the first operation manner of the fourth user operation of the second button may be rolling up the function operation button, and the second operation manner of the fifth user operation may be pushing the function operation button to the right. The first control item corresponding to the rolling up the function operation button may be a 2x speed playback control item, and the second control item corresponding to the pushing the function operation button to the right may be a volume increase control item. In response to a roll up operation performed by the user on the function operation button, the vehicle may control media to be played at a 2x speed. In response to a push right operation performed by the user on the function operation button, the vehicle may increase the volume of the media.

It may be understood that, different operation manners on the function operation button in each cockpit function may be bound to different control items. The user may perform different operations on the second button to control different control items of a cockpit function. In this way, the user can control different content of the cockpit function.

With reference to the first aspect, in some embodiments, the first button may be a single button, and an operation manner of the first button may include: single press and press and hold. The second button may be a scroll wheel, and an operation manner of the second button includes: roll up, roll down, push left, push right, and single press.

In some other embodiments, the first button may be a scroll wheel, and an operation manner of the first button may include: roll up, roll down, push left, push right, and single press.

The roll up may be referred to as rolling upward, the roll down may be referred to as rolling downward, the push left may be referred to as pushing leftward, and the push right may be referred to as pushing rightward. A user operation on the first button or the second button may include one or more of the foregoing operation manners. For example, the user operation may include rolling down the second button a plurality of times, or may be a combination of rolling up and rolling down the first button.

It may be understood that, when the button is the scroll wheel, a plurality of types of button operations may be implemented at one button location. This can reduce a quantity of buttons on the steering wheel and avoid mistouch of the user. In addition, the user does not need to distract attention to find a button that the user wants to use, thereby improving safety of the user when the user uses the first button and the second button to control the cockpit functions.

With reference to the first aspect, in some embodiments, the display may be a dashboard display.

The dashboard display may be configured to display one or more pieces of driving information. To help the user view the driving information on the dashboard display during driving, the dashboard display may be disposed on a rear side of the steering wheel. In this way, the user can view the driving information and learn a running status of the vehicle without diverting a line of sight.

It may be understood that, displaying the first information of the cockpit function on the dashboard display may help the user control the cockpit function more conveniently during driving. The user can implement a plurality of cockpit functions without moving the line of sight away from the front. This improves driving safety of the user.

With reference to the first aspect, in some embodiments, the vehicle may include a first cockpit function set. The first cockpit function set is used by the vehicle to select, when detecting an operation on the first button, a cockpit function from the first cockpit function set and bind the cockpit function to the second button. The first cockpit function set may include the first cockpit function and the second cockpit function.

A representation manner of the first cockpit function set in the vehicle may be a cockpit function list including a plurality of cockpit function options. In response to an operation performed by the user on the first button, the vehicle may select, from the cockpit function list, a cockpit function corresponding to a cockpit function option and bind the cockpit function to the second button.

With reference to the first aspect, in some embodiments, the first cockpit function set may not include a third cockpit function. The vehicle detects a sixth user operation, and may add the third cockpit function to the first cockpit function set.

In some embodiments, after detecting a seventh user operation, the vehicle may delete the first cockpit function from the first cockpit function set.

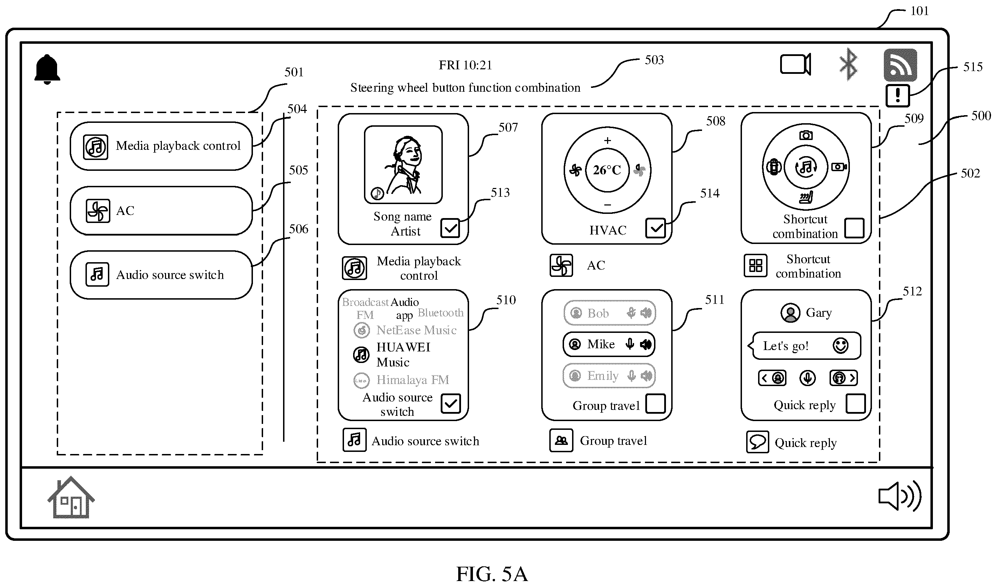

Specifically, the first cockpit function set may include a group travel function, a media playback control function, an air conditioner function, an audio source switch function, and a shortcut combination function. The third cockpit function may be a quick reply function. The sixth user operation may be an operation of adding the quick reply function to the first cockpit function set. The seventh user operation may be an operation of deleting the group travel function from the first cockpit function set. For scenarios in which a cockpit function is added to or deleted from a cockpit function set, refer to scenarios shown in FIG. 5A to FIG. 5D.

It may be understood that the vehicle may set the cockpit function included in the first cockpit function set. The vehicle can bind the second button to the cockpit function only when the cockpit function is included in the first cockpit function set. In this way, the user may switch the cockpit function in the customized first cockpit function set by using the first button. The user may set the cockpit function included in the first cockpit function set, to implement a more free and diversified cockpit function combination manner.

With reference to the first aspect, in some embodiments, cockpit functions included in the first cockpit function set may be arranged in a first sequence. That the vehicle may switch, in response to the third user operation on the first button, a cockpit function bound to the second button from the first cockpit function to the second cockpit function specifically includes: In response to the third user operation on the first button, the vehicle may switch, in the first sequence starting from the first cockpit function in the first cockpit function set, the cockpit function bound to the second button, and determine that the second button and the second cockpit function are bound.

In some embodiments, the vehicle detects an eighth user operation, and may adjust the first sequence to a second sequence.

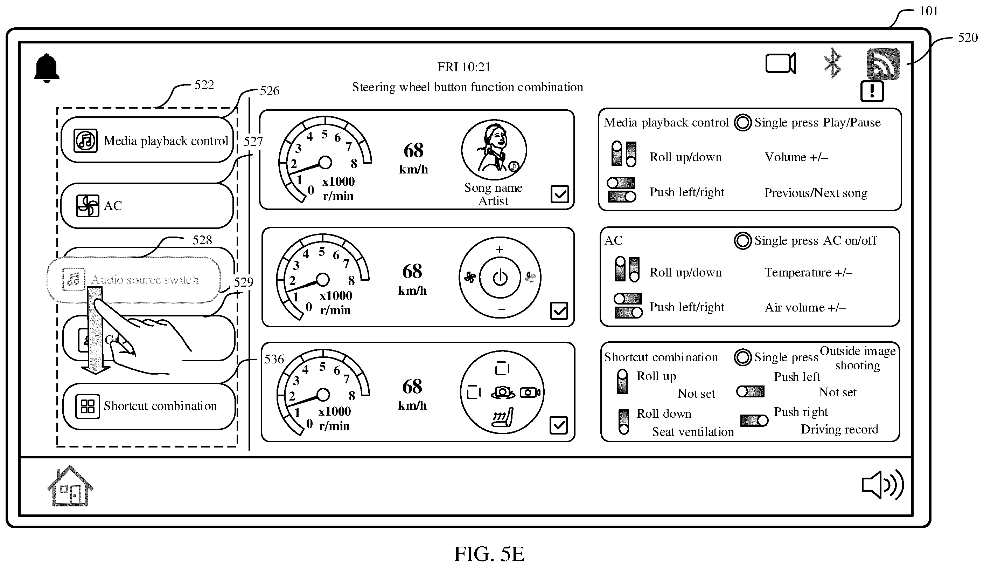

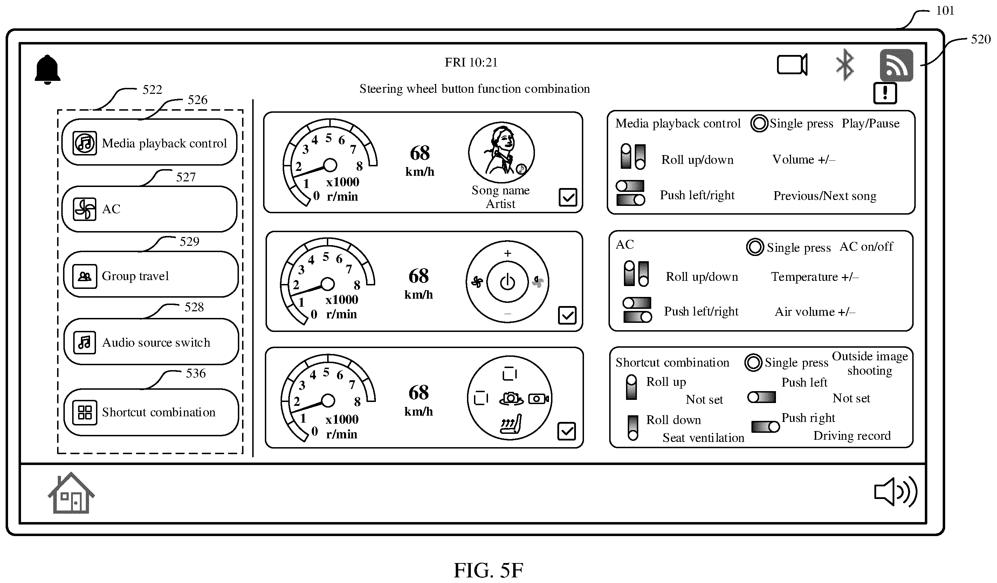

Specifically, the first cockpit function set may include a media playback control function, an air conditioner function, a group travel function, an audio source switch function, and a shortcut combination function. The first sequence may be that the media playback control function, the air conditioner function, the audio source switch function, the group travel function, and the shortcut combination function included in the first cockpit function set are in a front-to-back sequence. The first cockpit function may be the group travel function, and the second cockpit function may be the media playback control function. In this case, the third user operation may be an operation of pressing the first button three times by the user. In response to the third user operation on the first button, the vehicle may start from the group travel function, sequentially pass through the audio source switch function and the shortcut combination function, and finally determine that the media playback control function is bound to the second button. The second sequence may be that the media playback control function, the air conditioner function, the group travel function, the audio source switch function, and the shortcut combination function included in the first cockpit function set are in a front-to-back sequence. The eighth user operation may be an operation of adjusting, by the user, a sequential location of the audio source switch function in the first cockpit function set to a location between the group travel function and the shortcut combination function. For a scenario in which the vehicle detects the eighth user operation and adjusts the first sequence to the second sequence, refer to scenarios shown in FIG. 5E and FIG. 5F. It may be understood that a sequence of cockpit functions included in the first cockpit function set determines an operation manner and an operation quantity of the first button when the user switches the cockpit function. The user may arrange the cockpit functions in the first cockpit function set in different sequences according to requirements of the user. In this way, when switching the cockpit function by using the first button, the user can quickly switch to a desired cockpit function.

With reference to the first aspect, in some embodiments, the vehicle detects a ninth user operation, and when the second button is bound to the second cockpit function, the vehicle may switch the first control item bound to the first operation manner of the second button to a third control item of the second cockpit function. In some embodiments, when the second button is bound to the second cockpit function, the vehicle may control the third control item of the second cockpit function in response to a tenth user operation on the second button. An operation manner of the tenth user operation may be the first operation manner.

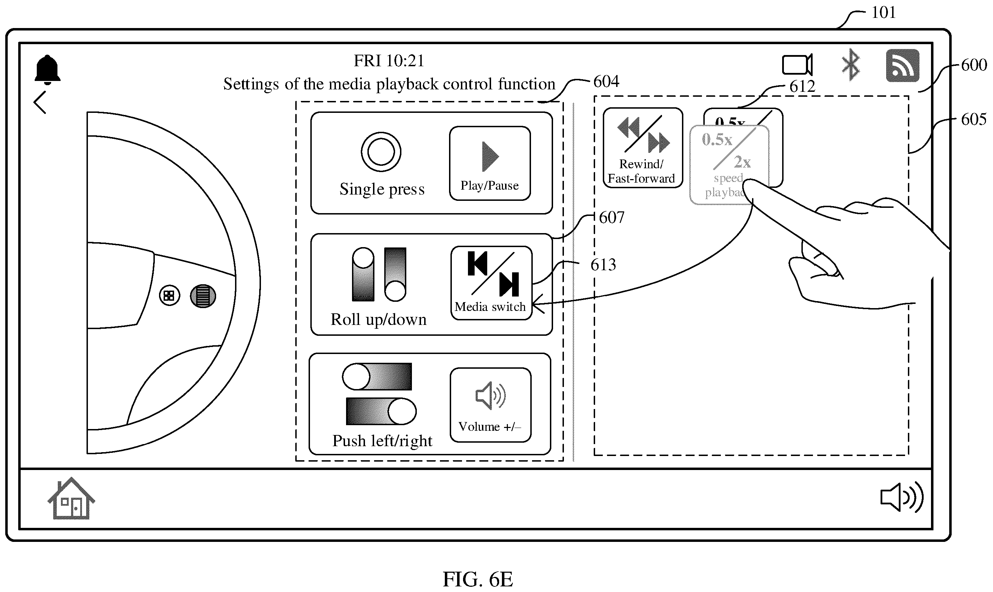

Specifically, the second cockpit function may be the media playback control function. The first operation manner of the second button may be roll up, and the first control item may be a 2x speed playback control item in media switching. The roll up may be bound to the 2x speed playback control item. The third control item may be a backward switching control item. For the ninth user operation, refer to an operation of replacing a media switching control item control in a roll up and roll down operation control with a speed playback control item control shown in FIG. 6E. In response to the ninth user operation, the vehicle may replace the 2x speed playback control item with the backward switching control item when the second button is bound to the 2x speed playback control item of the media playback control function. In this case, the operation manner of the tenth user operation may be roll up. In response to the roll up operation of the user, the vehicle may control the media playback control function to switch backward.

It may be understood that, the user may change, according to a requirement of the user, content of a control item of the second cockpit function that can be operated by using the second button, or change an operation manner of the control item of the second cockpit function, so that the operation manner better conforms to a habit of the user.

With reference to the first aspect, in some embodiments, a cockpit function provided by the vehicle may include one or more of the following: the media playback control function, the air conditioner function, the shortcut combination function, the audio source switch function, the group travel function, and the quick reply function.

It may be understood that cockpit functions that can be controlled by the vehicle are increasingly diversified and modernized. The user may select a desired cockpit function from a plurality of cockpit functions, or may set a switching sequence of the cockpit functions. In this way, the user can use the self-defined cockpit function more conveniently. The user may further set a control item of each cockpit function, so that the user may set control content of the cockpit function according to a requirement of the user. Finally, the user may control the cockpit function by using a button on the steering wheel, and obtain a feedback result of controlling the cockpit function by using the display. By using the foregoing method, the user can implement diversified cockpit functions without moving the line of sight away from the front and without moving the hand away from the steering wheel. According to a second aspect, this application provides a vehicle. The vehicle includes a display apparatus, a memory, and a processor. The display apparatus may be configured to display an interface, the memory may store computer-executable instructions, and when the processor executes the computer-executable instructions, the vehicle is enabled to implement any possible implementation of the first aspect.

According to a third aspect, this application provides a computer storage medium, including instructions. When the instructions are run on a vehicle, the vehicle is enabled to perform any possible implementation of the first aspect.

According to a fourth aspect, an embodiment of this application provides a chip. The chip is used in a vehicle, the chip includes one or more processors, and the processor is configured to invoke computer instructions, so that the vehicle performs any possible implementation of the first aspect.

According to a fifth aspect, an embodiment of this application provides a computer program product including instructions. When the computer program product runs on a device, the vehicle is enabled to perform any possible implementation of the first aspect.

It may be understood that the vehicle provided in the second aspect, the computer storage medium provided in the third aspect, the chip provided in the fourth aspect, and the computer program product provided in the fifth aspect are all configured to perform the method provided in embodiments of this application. Therefore, for beneficial effect that can be achieved by the vehicle, the computer storage medium, the chip, and the computer program product, refer to the beneficial effect in the corresponding method. Details are not described herein again.

### BRIEF DESCRIPTION OF DRAWINGS

FIG. 1 is a diagram of a scenario in which a user drives a vehicle according to an embodiment of this application;
FIG. 2 is a diagram of a structure of a vehicle 100 according to an embodiment of this application;
FIG. 3 is a diagram of a hardware structure of an intelligent cockpit domain 21 according to an embodiment of this application;
FIG. 4A is a diagram of a structure of a steering wheel according to an embodiment of this application;
FIG. 4B is another diagram of a structure of a steering wheel according to an embodiment of this application;
FIG. 5A to FIG. 5F are diagrams of some scenarios in which a cockpit function list is set according to an embodiment of this application;
FIG. 6A to FIG. 6F are diagrams of some scenarios in which a control item binding table of a cockpit function is set according to an embodiment of this application;
FIG. 7A and FIG. 7B are diagrams of some other scenarios in which a control item binding table of a cockpit function is set according to an embodiment of this application;
FIG. 8 is a schematic flowchart of a cockpit function operation method according to an embodiment of this application;
FIG. 9A to FIG. 9C are diagrams of some scenarios in which a cockpit function is switched by using a mode switch button 401 according to an embodiment of this application; and
FIG. 9D to FIG. 9G are diagrams of some scenarios in which a cockpit function is controlled by using a function operation button 402 according to an embodiment of this application.

### DESCRIPTION OF EMBODIMENTS

The following describes the technical solutions in embodiments of this application with reference to the accompanying drawings in embodiments of this application. In the descriptions of embodiments of this application, terms used in the following embodiments are merely intended to describe purposes of specific embodiments, but are not intended to limit this application. The terms "one", "the", "the foregoing", "this", and "the one" of singular forms used in this specification and the appended claims of this application are also intended to include expressions such as "one or more", unless otherwise specified in the context clearly. It should be further understood that, in the following embodiments of this application, "at least one" and "one or more" mean one or more (including two). The term "and/or" is used to describe an association relationship between associated objects and represents that three relationships may exist. For example, A and/or B may represent the following cases: Only A exists, both A and B exist, and only B exists, where A and B may be singular or plural. The character "/" generally indicates an "or" relationship between the associated objects.

Reference to "an embodiment", "some embodiments", or the like described in this specification indicates that one or more embodiments of this application include a specific feature, structure, or characteristic described with reference to the embodiment. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner. The term "connection" includes direct connection and indirect connection, unless otherwise specified. "First" and "second" are merely intended for a purpose of description, and shall not be understood as an indication or implication of relative importance or implicit indication of a quantity of indicated technical features.

In embodiments of this application, the word "example", "for example", or the like is used to give an example, an illustration, or a description. Any embodiment or design solution described as an "example" or "for example" in embodiments of this application should not be explained as being more preferred or having more advantages than another embodiment or design solution. Exactly, use of the word "example", "for example", or the like is intended to present a related concept in a specific manner.

A term "user interface (user interface, UI)" in the following embodiments of this application is a medium interface for interaction and information exchange between an application (application, APP) or an operating system (operating system, OS) and a user, and implements conversion between an internal form of information and a form acceptable to the user. The user interface is source code written in a specific computer language like Java or an extensible markup language (extensible markup language, XML). Interface source code is parsed and rendered on an electronic device, and is finally presented as content that can be identified by the user. A frequently-used representation form of the user interface is a graphical user interface (graphic user interface, GUI), and is a user interface that is displayed in a graphical manner and that is related to a computer operation. The user interface may be a visual interface element like a text, an icon, a button, a menu, a tab, a text box, a dialog box, a status bar, a navigation bar, or a widget that is displayed on a display of the electronic device.

A scenario in which a user drives a vehicle provided in this application is first described herein.

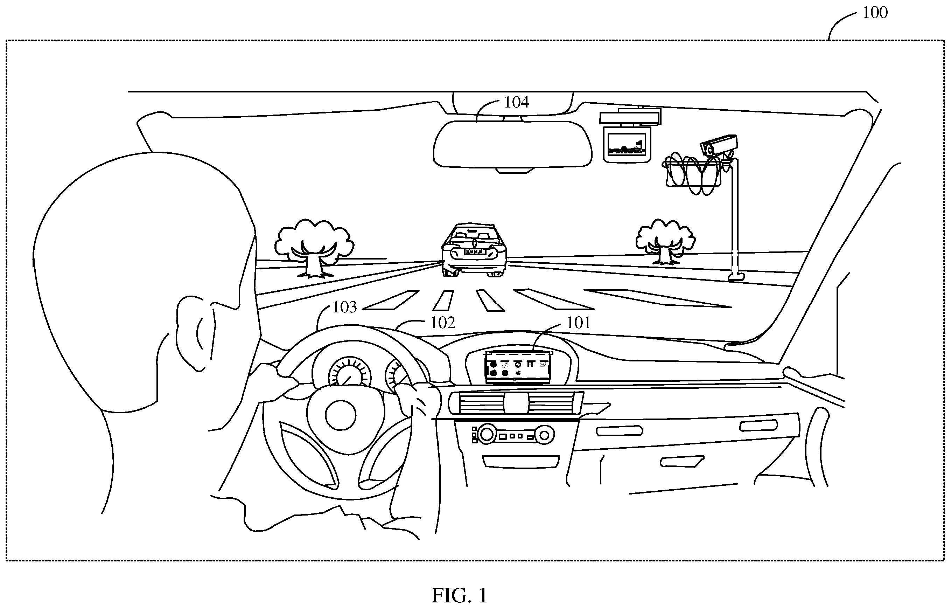

FIG. 1 is an example of a diagram of a scenario in which a user drives a vehicle.

As shown in FIG. 1, a vehicle 100 may include a plurality of displays. In the driving scenario, displays operated and observed by a driver may include a vehicle-mounted display 101, a dashboard display 102, a streaming media rear-view mirror 104, and the like.

The vehicle-mounted display 101 may help the driver control cockpit functions in an intelligent cockpit.

The cockpit functions are a series of functions that meet requirements of the driver and a passenger for various scenarios such as entertainment, rest, study, and work by actively monitoring a vehicle status and statuses of the driver and the passenger or in a plurality of human-machine interaction manners. For example, the cockpit function may include but is not limited to functions such as a media playback control function, an air conditioner function, a shortcut combination function, an audio source switch function, a group travel function, and a quick reply function. The media playback control function may be used to control playback, pause, speed playback, volume increase or decrease, fast forward, and slow forward of various media. The media may include an audio and a video. The air conditioner function may be used to control air conditioning modes (for example, ventilation, heating, and cooling), temperatures, wind speeds, and the like of different partitions (for example, a left part of the cockpit and a right part of the cockpit) and different components (for example, the steering wheel and a seat back) in the vehicle 100, and may also be used to control a freshener. The shortcut combination function may be used to combine various shortcut functions. The shortcut functions are cockpit functions that only need to be enabled or disabled by the user and do not need to be additionally adjusted by the user. The audio source switch function may be used to switch to-be-played media between different versions or different media types of media software released by different vendors. The group travel function may be used to control microphones and speakers of group members. The quick reply function may be used by the user to quickly reply to messages such as instant messaging software messages or mobile phone SMS messages.

In some implementations, the vehicle-mounted display 101 may be embedded in a center console between a driver position and a front passenger position. When the driver needs to use a cockpit function, the driver may tap a cockpit function application icon in the vehicle-mounted display 101, and control the cockpit function by using a virtual button on the vehicle-mounted display 101. In some other implementations, the vehicle-mounted display 101 may be a floating display, and all or a part of the vehicle-mounted display 101 is disposed above the center console in a protruding manner.

In a driving process, when the driver wants to control a cockpit function by using the vehicle-mounted display 101, the driver usually needs to move a hand away from the steering wheel 103 and move a line of sight away from the front to operate the vehicle-mounted display 101. The driver needs to distract attention for operating the vehicle-mounted display 101. Consequently, the driver ignores a surrounding driving environment, and cannot cope with an emergency in the driving process in time.

The dashboard display 102 may be configured to display one or more pieces of driving information. For example, the driving information displayed on the dashboard display 102 may include but is not limited to a fuel gauge, an odometer, and a vehicle speed gauge. The dashboard display 102 may be disposed on a rear side of the steering wheel. The driver may observe the dashboard display 102 through an upper hollow part of the steering wheel. In some other implementations, the dashboard display 102 may be disposed above a rear side of the steering wheel. This may rise a location of the dashboard display 102 and prevent the steering wheel 103 from blocking the dashboard display 102. In a design of the location of the dashboard display 102, convenience of viewing the dashboard display 102 by the user is usually mainly considered, to reduce impact of viewing the dashboard display 102 on attention of the user. The location of the dashboard display 102 is not specifically limited in embodiments of this application.

To help the driver control cockpit functions, in some implementations, one or more buttons may be disposed on the steering wheel 103. Each button can be used to control one cockpit function. The driver may operate corresponding cockpit functions by using one or more buttons on the steering wheel 103. In this way, the driver may implement a plurality of cockpit functions. However, an area in which a button can be disposed on the steering wheel 103 is limited. The single-button control manner cannot adapt to an increasingly modernized cockpit function. In addition, if a cockpit function controlled by using a button disposed on the steering wheel 103 is not commonly used by the user, the button may be idle for a long time.

This application provides a method for operating a cockpit function by using a button on the steering wheel 103. Two types of buttons are disposed on the steering wheel 103: a mode switch button and a function operation button. The mode switch button may receive operations of the user, and bind the function operation button to different cockpit functions. The vehicle 100 may receive an operation performed by the user on the function operation button, and control a cockpit function bound to the function operation button.

In some embodiments, the cockpit function may include a plurality of control items. Different operations performed by the user on the function operation button may correspond to different control items of the bound cockpit function. The control items may include but are not limited to a function of adjusting a cockpit function parameter value, a function of selecting an option, a start function, a stop function, and the like. For example, the media playback control function may include adjusting a volume value, a speed value, a progress value, and the like during media playback, selecting a previous song and a next song, starting to play and pausing playing media, and the like.

When the user uses the button on the steering wheel 103, the display on the vehicle 100 may display cockpit function information, and provide feedback information of a button operation for the user, to help the user better control the cockpit function. The cockpit function information may include parameter information, operation information, and status information of the cockpit function, to help the user learn a current status of the cockpit function. The parameter information may include a parameter that is set by the user. The operation information may include a correspondence between different operations on the mode switch button and control items of the cockpit function. The status information may include a status of implementation content of the cockpit function. In embodiments of this application, the cockpit function information may be referred to as first information. The cockpit function information may be displayed by using a text, a picture, an animation, or the like. A display manner of the cockpit function information is not limited in embodiments of this application. For example, when the cockpit function is the media playback control function, the parameter information of the media playback control function may include a volume value, a playback speed, and the like. The operation information of the media playback control function may be an association relationship between different operation manners and control items when the function operation button is operated. The association relationship may be represented by a location relationship between an icon corresponding to a control item and another icon in the cockpit function information. The status information of the media playback control function may be a name of a media application that is being played currently, a media name (for example, a song name or a broadcast frequency band), and the like.

An objective of the method is to provide a more safe and more optional human-machine interaction manner in the driving scenario. This feature meets user requirements for modern, diversified, and personalized cockpit functions in the driving scenario, and provides the user with more choices on the premise of safe driving. In this way, the user can use the personalized and diversified cockpit functions without moving the line of sight away from the front and without moving a hand away from the steering wheel, to improve cockpit function use experience and driving safety of the user.

The following describes a structure of a vehicle according to an embodiment of this application.

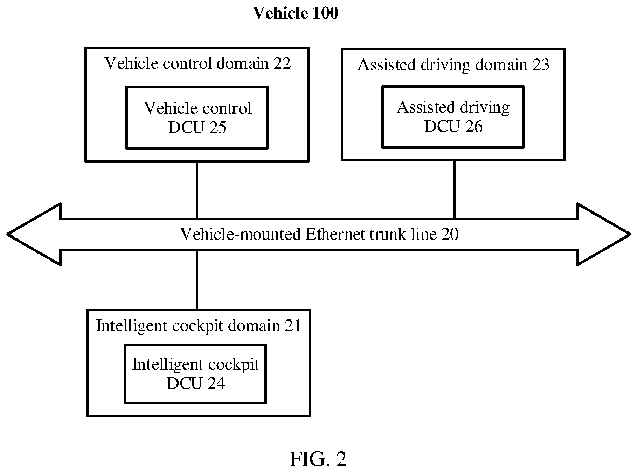

FIG. 2 is a diagram of a structure of a vehicle 100 according to an embodiment of this application.

Components in the vehicle 100 may be divided into a plurality of domains. Each domain may include one or more functional modules of the vehicle 100. The domains of the vehicle 100 may be divided in different manners based on different functional module division manners.

Each domain in the vehicle 100 may include a domain control unit (domain controller unit, DCU). The DCU is equivalent to a processor or the brain of each domain and instructs a component in the domain to perform actions. The DCU may include a system-on-chip (system on Chip, SOC), a microcontroller unit (microcontroller unit, MCU), a random access memory (random access memory, RAM), a read-only memory (random-only memory, ROM), an input/output (I/O) interface, an analog-to-digital converter (A/D converter), and a large-scale integrated circuit for inputting, outputting, shaping, driving, or the like.

The DCU may be connected to a vehicle-mounted Ethernet (ethernet) trunk line, and the component in each domain may communicate with a component in another domain by using the DCU of the domain through the vehicle-mounted Ethernet trunk line. This is not limited to the vehicle-mounted Ethernet trunk line. In some other embodiments, the domains of the vehicle 100 may be connected to and communicate with each other in another manner. For example, the domains may further communicate with each other by using a controller area network (controller area network, CAN) bus, a vehicle-mounted Ethernet (ethernet) local interconnect network (local interconnect network, LIN) bus, a FlexRay, a wireless local area network (Wireless Local Area Network, WLAN), a common vehicle-mounted network system (media oriented systems, MOST) bus, or the like. This is not limited in embodiments of this application. The following embodiments are described by using an example in which the components communicate with each other by using the vehicle-mounted Ethernet (ethernet) main trunk line.

In some implementations, the vehicle 100 may be divided into a left vehicle body domain, a right vehicle body domain, and a front vehicle body domain based on physical locations of the components, and each domain may control components included in a corresponding vehicle body. For example, the front vehicle body domain may include components such as headlights, wipers, and a motor, and these components may be managed by a front vehicle body DCU. The left vehicle body domain may include components such as a left vehicle light, a left door and window, a steering wheel, and a dashboard display, and these components may be managed by a left vehicle body DCU. The right vehicle body domain may include components such as a right vehicle light, a right door and window, an air conditioner, and some rear functions such as a rear high-mounted brake light, and these components may be managed by a rear vehicle body DCU.

In some other implementations, the vehicle 100 may be divided into an intelligent cockpit domain, a vehicle control domain, and an assisted driving domain. In subsequent embodiments of this application, an example in which the vehicle 100 includes the intelligent cockpit domain, the vehicle control domain, and the assisted driving domain is specifically used for description.

As shown in FIG. 2, the vehicle 100 may be divided into an intelligent cockpit domain 21, a vehicle control domain 22, and an assisted driving domain 23.

An intelligent cockpit DCU 24 is configured to control a component in the intelligent cockpit domain 21.

The component in the intelligent cockpit domain 21 may be configured to control a cockpit function by actively monitoring statuses of a driver and passenger and a vehicle status or passively obtaining instructions of the driver and passenger, to provide services in various scenarios such as entertainment, rest, study, and work for the driver and passenger. The intelligent cockpit domain 21 may include components that implement the cockpit function. For example, the intelligent cockpit domain 21 may include a component that obtains control commands of the driver and passenger in a plurality of human-machine interaction forms, a component that actively monitors the vehicle status and the statuses of the driver and passenger, a component that provides various life scenario services for a user according to an obtained user requirement, and the like.

A vehicle control DCU 25 is configured to control a component in the vehicle control domain 22.

The component in the vehicle control domain 22 may be configured to manage or control vehicle power, a chassis, and a vehicle body status, to implement safe driving of the vehicle. For example, the vehicle control DCU 25 may control power of the vehicle 100 by using an internal combustion engine, an engine, a battery, a speed converter, and the like, to ensure power safety of the vehicle 100 and optimize power performance. In addition, the vehicle control DCU 25 may control functions such as transmission, braking, driving, and steering of the vehicle 100 by using an air spring, a suspension damper, a steering column, a shock absorber, and the like. Furthermore, the vehicle control DCU 25 may further control vehicle body components. The vehicle body components may include but are not limited to the vehicle headlights, vehicle rear lights, interior parts, vehicle windows, the wipers, and an intelligent key light.

An assisted driving DCU 26 is configured to control a component in the assisted driving domain 23.

The component in the assisted driving domain 23 may be configured to implement sensing, decisionmaking, and control of the vehicle 100 during assisted driving. The assisted driving domain 23 may include a lidar sensor, a millimeter-wave radar sensor, and the like, and is configured to sense an ambient environment. After obtaining an external environment, the assisted driving DCU 26 may make an assisted driving decision through route planning, image processing, and the like. The assisted driving DCU 26 may generate a vehicle control instruction after making the assisted driving decision. Further, the assisted driving DCU 26 may send the vehicle control instruction to the vehicle control DCU 25 through a vehicle-mounted Ethernet trunk line 20. The vehicle control DCU 25 may control, according to the vehicle control instruction, the vehicle to perform a corresponding action, to implement different levels of assisted driving.

In some embodiments, the intelligent cockpit DCU 24 may receive, through the vehicle-mounted Ethernet trunk line 20, navigation information sent by the assisted driving DCU 26, and control a display in the vehicle 100 to display a navigation map.

In some other embodiments, the intelligent cockpit DCU 24 may send, to the vehicle control DCU 25 through the vehicle-mounted Ethernet trunk line 20, control information for opening the vehicle window. Correspondingly, the vehicle control DCU 25 may control the vehicle window to be opened.

The vehicle 100 may further include a plurality of interfaces, for example, a USB interface, an RS-232 interface, and an RS485 interface, and may be externally connected to a camera, a microphone, a headset, and a user-side electronic device.

In some embodiments, the structure of the vehicle 100 may include more or fewer domains than those shown in the figure, or combine some domains, or split some domains, or each component of the vehicle 100 may interact with another component independently without being controlled by a domain controller. It may be understood that the structure shown in this embodiment of this application does not constitute a specific limitation on the structure of the vehicle 100.

In a possible implementation, the vehicle 100 may further include a vehicle-mounted intelligent central computing platform, which serves as a general control center of the vehicle 100 to control DCUs in all domains of the vehicle 100, or directly control the components in the vehicle 100.

For ease of description and better understanding, the structure of the vehicle 100 shown in FIG. 2 is specifically used for description in subsequent embodiments of this application. For a cockpit function operation method for another structure of the vehicle, refer to the cockpit function operation method for the structure of the vehicle 100. Details about the cockpit function operation method for another structure of the vehicle are not described in this application.

The following describes a hardware structure of an intelligent cockpit domain provided in embodiments of this application.

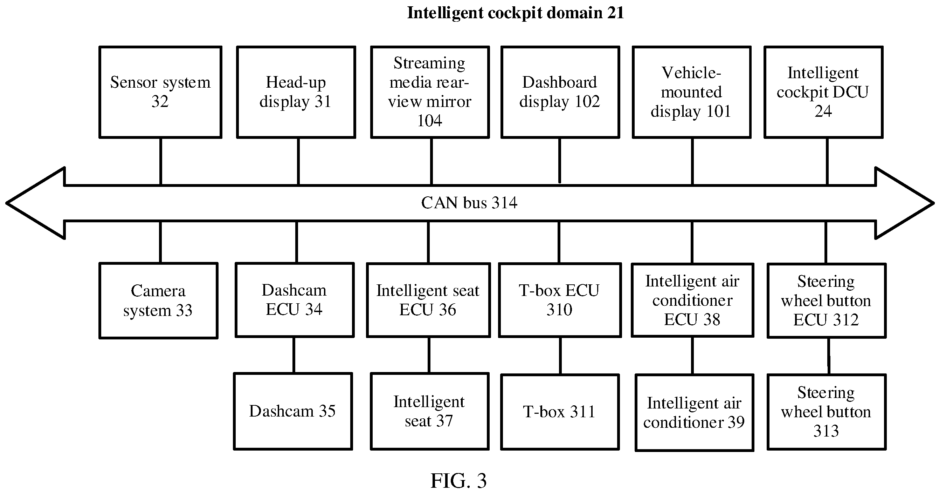

FIG. 3 is a diagram of a hardware structure of the intelligent cockpit domain 21 in the vehicle 100 according to an embodiment of this application.

As shown in FIG. 3, the intelligent cockpit domain 21 in the vehicle 100 may include: the intelligent cockpit DCU 24, a vehicle-mounted display 101, a dashboard display 102, a streaming media rear-view mirror 104, a head-up display 31, a sensor system 32, a camera system 33, a dashcam 35, an intelligent seat 37, a T-box 311, an intelligent air conditioner 39, a steering wheel button 313, a controller area network (controller area network, CAN) bus 314, and a plurality of electronic control units (electronic control unit, ECU).

The CAN bus 314 is a serial communication network that supports distributed control or real-time control, and is configured to connect the components of the intelligent cockpit domain 21. Any component on the CAN bus 314 may receive all data transmitted on the CAN bus 314. A frame transmitted on the CAN bus 314 may include a data frame, a remote frame, an error frame, and an overload frame. Different types of data are transmitted in different frames.

In addition to the CAN bus 314, in some other embodiments, the components of the intelligent cockpit domain 21 may alternatively be connected to and communicate with each other in another manner. For example, the components may alternatively communicate with each other through the vehicle-mounted Ethernet (ethernet) local interconnect network (local interconnect network, LIN) bus, the FlexRay, the common vehicle-mounted network system (media oriented systems, MOST) bus, or the like. This is not limited in embodiments of this application. The following embodiments are described by using an example in which the components communicate with each other through the CAN bus 314.

The intelligent cockpit DCU 24 is equivalent to a processor or the brain of the intelligent cockpit domain 21, to coordinate and control the components in the intelligent cockpit domain 21. The intelligent cockpit DCU 24 may instruct the components in the intelligent cockpit domain 21 to perform actions. For example, in response to an operation performed by the user on the steering wheel button 313, the intelligent cockpit DCU 24 may instruct, according to a button operation instruction sent by a steering wheel button ECU 312, a corresponding component to perform an action. Information in the button operation instruction may include a button type and an operation manner on the button. The button type includes the function operation button and the mode switch button. For example, when a slide left operation on the function operation button is bound to an out-of-vehicle image obtaining control item, the intelligent cockpit DCU 24 may receive a button operation instruction of the steering wheel button ECU 312. The button operation instruction includes information about the slide left on the function operation button. The intelligent cockpit DCU 24 may query that a cockpit function control item bound to an operation manner corresponding to the button operation instruction is an out-of-vehicle image. Further, the intelligent cockpit DCU 24 may send a control command to the CAN bus 314. The camera system 33 may receive the control command on the CAN bus 314, and send out-of-vehicle image data to the CAN bus 314. The intelligent cockpit DCU 24 may send a control command to the CAN bus 314 after receiving the out-of-vehicle image data, to control the streaming media rear-view mirror 104 to display a rear-of-vehicle image, control the vehicle-mounted display 101 to display a 360° vehicle surround-view image, and control a plurality of displays in the intelligent cockpit domain 21 to implement an out-of-vehicle image function.

The components in the intelligent cockpit domain 21 may further communicate with a component outside the intelligent cockpit domain 21 through the intelligent cockpit DCU 24. For example, after receiving a button operation instruction sent by the steering wheel button ECU 312, the intelligent cockpit DCU 24 may query that a cockpit function control item bound to an operation corresponding to the button operation instruction is "automated parking assist". The intelligent cockpit DCU 24 may communicate with the assisted driving DCU 26 in the vehicle 100 through the vehicle-mounted Ethernet trunk line 20. After making a parking decision based on an ambient environment, the assisted driving DCU 26 may send a control command for the vehicle 100 to the vehicle control DCU 25 through the vehicle-mounted Ethernet trunk line 20. Finally, the vehicle control DCU 25 controls the components in the vehicle control domain 22 to implement an automated parking assist function.

The vehicle-mounted display 101 may be a touch-sensitive liquid crystal display. The vehicle-mounted display 101 may display a user interface for controlling the cockpit functions. In response to an operation performed by the user on the vehicle-mounted display 101, the intelligent cockpit DCU 24 may control the one or more cockpit functions. In addition, the vehicle-mounted display 101 may further display a user interface for setting an operation manner and content of the steering wheel button 313.

The dashboard display 102 may be configured to display one or more pieces of driving information, for example, a fuel gauge, an electricity gauge, an odometer, and a vehicle speed gauge.

The streaming media rear-view mirror 104 may be configured to shoot an image behind the vehicle, so that the driver is not blocked by an object in the vehicle when observing the rear, and a wider field of view is provided for the driver.

The head-up display 31 may include an image generation component, a plane mirror, a curved mirror, and the like, and project information onto a windshield according to an imaging principle. Through projection on the windshield, the driver can obtain the information without moving the line of sight away from the front. For example, the head-up display 31 may project assisted driving information (for example, pedestrian recognition and a turning prompt) or instrument information (for example, the fuel gauge, the electricity gauge, the odometer, and the vehicle speed gauge) onto the windshield.

Not limited to the vehicle-mounted display 101, the dashboard display 102, the head-up display 31, and the streaming media rear-view mirror 104, the intelligent cockpit domain 21 may further include another display or display apparatus. The displays or the display apparatuses in the intelligent cockpit domain 21 may be controlled by the intelligent cockpit DCU 24, to implement "one-core multi-screen", or may be independently controlled by respective ECUs.

For ease of understanding, in subsequent embodiments of this application, the cockpit function operation method is described by using an example in which all displays or display apparatuses are controlled by the intelligent cockpit DCU 24. In another method for controlling the displays or the display apparatuses, for a cockpit function operation method, refer to the cockpit function control method used when the intelligent cockpit DCU 24 uniformly controls the displays or the display apparatuses. The cockpit function operation method in the another method for controlling the displays or the display apparatuses is not described in detail in this application.

The camera system 33 may include a plurality of cameras. The camera is configured to capture a static image or a video. The cameras in the camera system 33 may be disposed in locations such as the front, the rear, a side, or the inside of the vehicle, to help implement functions such as assisted driving, travel recording, panoramic view, and in-vehicle monitoring.

The sensor system 32 may include an acceleration sensor, a vehicle speed sensor, a vibration sensor, a gyroscope sensor, a radar sensor, a signal transmitter, a signal receiver, a temperature sensor, a pressure sensor, and the like. The acceleration sensor and the vehicle speed sensor are configured to detect a speed of the vehicle 100. The vibration sensor may be disposed under a seat, or in a seat belt, a seat back, an operation panel, an airbag, or another location, and is configured to detect whether the vehicle 100 is collided and detect a location of the user. The gyroscope sensor may be configured to determine a motion posture of the vehicle 100. The radar sensor may include a lidar, an ultrasonic radar, a millimeter wave radar, and the like. The radar sensor is configured to emit an electromagnetic wave to illuminate a target and receive an echo from the target, so as to obtain information such as a distance from the target to an electromagnetic wave transmission point, a distance change rate (radial velocity), a direction, and a height, and then recognize another vehicle, a pedestrian, a roadblock, or the like near the vehicle 100. The signal transmitter and the signal receiver are configured to receive and send a signal. The signal may be used to detect the location of the user, and the signal may be, for example, an ultrasonic wave, a millimeter wave, or a laser. The temperature sensor may be configured to detect a temperature of the driver. The pressure sensor may be disposed under the seat, and is configured to detect pressure borne by the seat, to determine whether the current seat is taken by a person.

The camera system 33 and the sensor system 32 may be configured to detect an ambient environment, so that the vehicle 100 makes a corresponding decision to cope with an environment change. For example, when the vehicle 100 is in assisted driving, the intelligent cockpit DCU 24 may process data of the camera system 33 and the sensor system 32, and send the data to the assisted driving DCU 26 through the vehicle-mounted Ethernet trunk line 20. After receiving the foregoing data, the assisted driving domain DCU 26 may make a decision on assisted driving of the vehicle 100.

The intelligent cockpit domain 21 may include a plurality of ECUs, and each ECU may control one or more components. The ECU is equivalent to a processor or the brain of the component, and may obtain an instruction sent by the intelligent cockpit DCU 24 on the CAN bus 314 to instruct the component to perform a corresponding action. The ECU may include a security chip, a microcontroller unit (microcontroller unit, MCU), a random access memory (random access memory, RAM), a read-only memory (random-only memory, ROM), an input/output interface (I/O), an analog/digital converter (A/D converter), and a large-scale integrated circuit for inputting, outputting, shaping, driving, or the like.

There are various types of ECUs. Different types of ECUs can be used to implement different functions.

A dashcam ECU 34 is configured to manage the dashcam 35.

A component of the dashcam 35 may include a dashcam host, a vehicle speed sensor, data analysis software, and the like. The dashcam 35 is an instrument that records an image and a sound of the vehicle in a driving process, including related information such as a driving time, a speed, and a location.

An intelligent seat ECU 36 is configured to control the intelligent seat 37.

The intelligent seat 37 may include seat components such as a framework, a guide rail, and a spring, and further include a back, a backrest, a seat cushion, an atmosphere light, a pneumatic apparatus, an airbag, and other external decoration materials. The intelligent seat ECU 36 may electrically adjust different parts of the intelligent seat 37, to adjust the seat to a comfortable posture for the driver. The intelligent seat ECU 36 may further turn on different atmosphere lights based on different seat postures or implement seat massaging by using the pneumatic apparatus, to reduce fatigue of the driver. In some embodiments, the intelligent seat 37 may detect, by using the pressure sensor, whether the current seat is taken by a person. When a vehicle door is opened, the intelligent seat 37 may move a seat location when it is determined that the seat is not taken by a person, to reserve large space to help the passenger get on and off the vehicle.

An intelligent air conditioner ECU 38 is configured to control the intelligent air conditioner 39.

The intelligent air conditioner 39 may include an air conditioner host, an air purification apparatus, a freshener, and a plurality of air exhaust vents, and is configured to adjust an air environment like a temperature, ventilation, and smell in the cockpit of the vehicle 100 or temperatures of some components such as the steering wheel and the seat that are in contact with the user.

The intelligent cockpit DCU 24 may monitor a fatigue state of the user by using the sensor system 32, the intelligent air conditioner 39, and the head-up display 31, and make a corresponding decision. For example, the intelligent cockpit DCU 24 may receive data from the sensor system 32 to determine whether the user is in the fatigue state. When the user is in the fatigue state, the intelligent cockpit DCU 24 may control the freshener of the intelligent air conditioner 39 to release aroma, to refresh the user, and remind the user to rest by using the head-up display 31.

The intelligent cockpit DCU 24 may monitor a sign of the user by using the sensor system 32, the intelligent seat 37, and the intelligent air conditioner 39, and perform a corresponding action. For example, the intelligent cockpit DCU 24 may detect a temperature of the user by using the temperature sensor of the sensor system 32. When it is determined that the temperature of the user is excessively high, the intelligent seat 37 may be controlled to adjust the seat location, and the intelligent air conditioner 39 may be controlled to enable seat ventilation and reduce the temperature in the cockpit.

A T-box ECU 310 is configured to manage the T-box 311.

The T-box 311 is mainly responsible for communicating with the Internet, and providing a remote communication interface for the vehicle 100. When receiving a remote request instruction, the T-box 311 may send a control instruction to the CAN bus 314. The intelligent cockpit DCU 24 may receive a control instruction to control a corresponding component, and provide services such as navigation, entertainment, driving data collection, driving trajectory recording, vehicle fault monitoring, remote vehicle query and control (such as unlocking and locking, air conditioner control, vehicle window control, engine torque limit, engine startup and shutdown, seat adjustment, and battery level, fuel amount, and vehicle door status query), driving behavior analysis, wireless hotspot sharing, road rescue, exception notification, and cockpit function setting.

The T-box 311 may be configured to communicate with a vehicle telematics service provider (telematics service provider, TSP) and an electronic device on a user side (for example, the driver), to implement vehicle status display and control on the electronic device. After the user sends a control command by using a vehicle management application on the electronic device, the TSP sends a request instruction to the T-box 311. After obtaining the control command, the T-box 311 sends a control packet through the CAN bus 314 to control the vehicle 100, and finally feeds back an operation result to the vehicle management application on the electronic device on the user side. In other words, data such as a vehicle status report, a driving report, fuel consumption statistics, a violation query, a location trajectory, and driving behavior read by the T-box 311 through the CAN bus 314 may be transmitted to a TSP background system through a network, and the TSP background system forwards the data to the electronic device on the user side for the user to view.

The T-box 311 may include a communication module.

The communication module may be configured to provide a wireless communication function, and support the vehicle 100 in communicating with another device by using a wireless communication technology, for example, a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), a near field communication (near field communication, NFC) technology, an infrared (infrared, IR) technology, or ultra-wideband (ultra-wideband, UWB). The communication module may be further configured to provide a mobile communication function, and support the vehicle 100 in communicating with another device by using a communication technology, for example, a global system for mobile communications (global system for mobile communications, GSM), a universal mobile telecommunications system (universal Mobile telecommunications system, UMTS), wideband code division multiple access (wideband code division multiple access, WCDMA), time-division code division multiple access (time-division code division multiple access, TD-SCDMA), long term evolution (long term evolution, LTE), 5G, and future 6G.

The communication module may establish a connection to and communicate with another device like a server or a user-side electronic device by using a cellular vehicle to everything (vehicle to everything, V2X) communication technology (cellular V2X, C-V2X). For example, the C-V2X may include long term evolution (long term evolution, LTE)-based V2X (LTE-V2X), 5G-V2X, and the like.

The T-box 311 may also be referred to as a head unit system, a remote information processor, a vehicle gateway, or the like. This is not limited in embodiments of this application. In some implementations, the T-box 311 may alternatively be independent of the intelligent cockpit domain 21. This is not limited in embodiments of this application.

The steering wheel button ECU 312 is configured to manage the steering wheel button 313.

The steering wheel button 313 may include one or more buttons on the steering wheel 103. The steering wheel button 313 may be configured to receive a user operation and quickly operate a cockpit function. In this embodiment of the present invention, the steering wheel button 313 may include a mode switch button and a function operation button. The function operation button may be bound to one or more cockpit functions. The function operation button may be configured to control a control item of a cockpit function bound to the function operation button. The mode switch button may be configured to change the cockpit function bound to the function operation button.

In some embodiments, the intelligent cockpit DCU 24 may include a cockpit function set. The cockpit function set may include one or more cockpit functions. The mode switch button may select cockpit functions from the cockpit function set, and bound different cockpit functions to the function operation button. The cockpit function set may be stored in the intelligent cockpit DCU 24 in a form of a list, and is referred to as a cockpit function list in the following embodiments. Each cockpit function may correspond to one cockpit function option in the cockpit function list. For ease of understanding, in the following embodiments, the cockpit function list is used as an example to describe the cockpit function control method provided in embodiments of this application.

In some embodiments, in response to a single press operation on the mode switch button on the steering wheel button 313, the steering wheel button ECU 312 may send a button operation instruction corresponding to the single press on the mode switch button. After receiving the button operation instruction, the intelligent cockpit DCU 24 may query the cockpit function bound to the function operation button in the cockpit function list. The intelligent cockpit DCU 24 may find a next cockpit function option in the cockpit function list, and bind the function operation button to a cockpit function corresponding to the cockpit function option. Correspondingly, the intelligent cockpit DCU 24 may control the display to display cockpit function information corresponding to the switched cockpit function, and store the cockpit function currently bound to the function operation button.

In some embodiments, when the function operation button on the steering wheel button 313 receives a user operation, the steering wheel button ECU 312 may broadcast a corresponding button operation instruction through the CAN bus 314. The intelligent cockpit DCU 24 may receive the button operation instruction, and query a cockpit function bound to the function operation button and a cockpit function control item corresponding to the button operation instruction. In this way, the intelligent cockpit DCU 24 may control or adjust the cockpit function bound to the function operation button. Correspondingly, the intelligent cockpit DCU 24 may control the display to display cockpit function information in response to the user operation.

In some embodiments, the camera system 33 and the sensor system 32 in the intelligent cockpit domain 21 may be included in the assisted driving domain 23. When a component in the intelligent cockpit domain 21 needs to obtain sensor data or image data, the intelligent cockpit DCU 24 may send a data obtaining request to the assisted driving DCU 26 through the vehicle-mounted Ethernet trunk line 20. After receiving the data obtaining request, the assisted driving domain DCU 26 sends the sensor data or the image data to the intelligent cockpit DCU 24. In some other embodiments, the vehicle 100 may split the cameras and the sensors in the camera system 33 and the sensor system 32, and dispose the cameras and the sensors in different domains based on locations or functions of the cameras and the sensors. For example, a camera for shooting the interior of the vehicle, a pressure sensor under a seat, and the like may be disposed in the intelligent cockpit domain 21, and managed by the intelligent cockpit DCU 24. The cameras in front and rear of the vehicle, the radar sensor, the signal transmitter, the signal receiver, and the like may be disposed in the assisted driving DCU 26. The acceleration sensor, the vehicle speed sensor, the vibration sensor, and the gyroscope sensor may be disposed in the vehicle control domain 22.

It may be understood that the structure shown in this embodiment of this application does not constitute a specific limitation on the vehicle 100. The intelligent cockpit domain 21 may include more or fewer components than those shown in the figure, or some components may be combined, or some components may be split, or different component arrangements may be used. The components shown in the figure may be implemented by hardware, software, or a combination of software and hardware. In some embodiments, the intelligent cockpit domain 21 may further include a separate memory, configured to store the cockpit function list and a cockpit function that is currently bound to the function operation button on the steering wheel button 313.

For ease of description and better understanding, in subsequent embodiments of this application, the vehicle-mounted display 101 and the dashboard display 102 are specifically used as examples to describe the cockpit function control method provided in this application. It may be understood that, not limited to the vehicle-mounted display 101 and the dashboard display 102, there may be another display or display apparatus. Persons skilled in the art should understand that, for an operation method and a display method of a user interface on another display or display apparatus, reference may be made to a subsequent operation method and a display method of a user interface on the vehicle-mounted display 101 and the dashboard display 102. A method for implementing the cockpit function control method in the another display or display apparatus is not described in detail in this application.

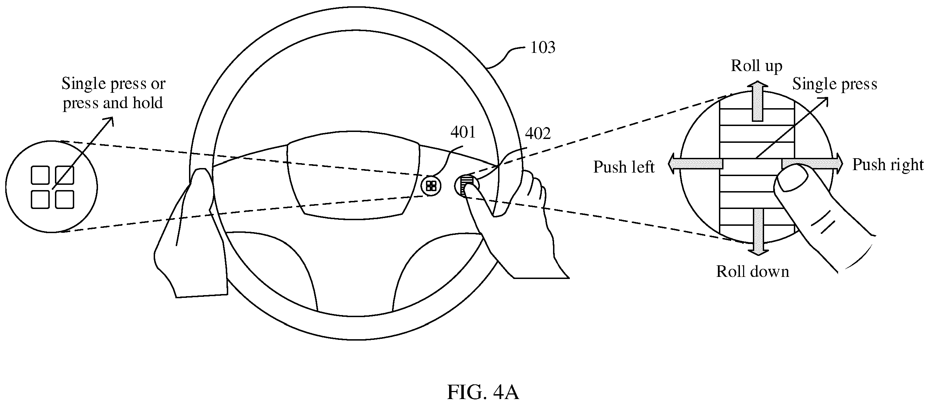

FIG. 4A is an example of a diagram of a structure of a steering wheel according to an embodiment of this application.

As shown in FIG. 4A, a mode switch button 401 and a function operation button 402 may be disposed on the steering wheel 103. The mode switch button 401 and the function operation button 402 may be on a same side of the steering wheel 103. In this way, the user can operate the mode switch button 401 and the function operation button 402 with one hand. Optionally, the mode switch button 401 and the function operation button 402 may alternatively be on different sides of the steering wheel 103, so that the user can collaboratively control the cockpit functions more conveniently by using two hands. For example, the mode switch button 401 may be on the left side of the steering wheel 103. The function operation button 402 may be on the right side of the steering wheel 103. In this way, the user may use the left hand to operate the mode switch button 401, and use the right hand to operate the function operation button 402. Locations of the mode switch button 401 and the function operation button 402 are not limited in this application.

In a possible implementation, the mode switch button 401 may be a press-type button, and can receive a single press operation and a press and hold operation of the user. The function operation button 402 may be a scroll button. The scroll button may implement a plurality of button operations at one button location. The function operation button 402 can receive single press, press and hold, push left, push right, roll up, and roll down operations of the user. The user may perform the single press, push left, push right, roll up, and roll down operations on the scroll button, or may combine the push left, push right, roll up, or roll down operation with the press and hold operation for use. For example, in response to an operation of pushing left and pressing and holding the scroll button by the user, a function of continuously pushing left the scroll button may be implemented.

In a possible implementation, the mode switch button 401 may be a press-type button, and can receive a single press operation, a double press operation, and a press and hold operation of the user. The function operation button 402 may be a group of press-type buttons that may include an up button, a down button, a left button, a right button, and a center button, and can receive the single press operation, the double press operation, or the press and hold operation of the user. Single press on the up button, the down button, the left button, the right button, and the center button may implement the same function as the roll up, roll down, push left, push right, and single press operations on the scroll button. Press and hold on the up button, the down button, the left button, the right button, and the center button may implement the same function as continuous roll up, continuous roll down, continuous push left, continuous push right, and press and hole operations on the scroll button. Double press on the up button, the down button, the left button, the right button, and the center button may implement the same function as double roll up, double roll down, double push left, double push right, and double press operations on the scroll button.

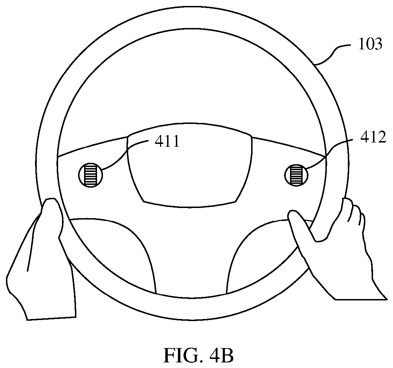

FIG. 4B is an example of another diagram of a structure of a steering wheel according to an embodiment of this application.

As shown in FIG. 4B, a mode switch button 411 and a function operation button 412 may be disposed on the steering wheel 103. For locations of the mode switch button 411 and the function operation button 412 on the steering wheel 103, refer to the locations of the mode switch button 401 and the function operation button 402 that are included in the steering wheel 103 and that are shown in FIG. 4A. Details are not described herein again.

In a possible implementation, both the mode switch button 411 and the function operation button 412 may be scroll buttons, and can receive single press, press and hold, push left, push right, roll up, and roll down operations of the user. In response to a roll up or roll down operation performed by the user on the mode switch button 411, the intelligent cockpit DCU 24 in the intelligent cockpit domain 21 may receive a button operation instruction sent by the steering wheel button ECU 312, and switch a cockpit function option in the cockpit function list. In an embodiment, in response to an operation of pushing left or right the mode switch button 411 by the user, the intelligent cockpit DCU 24 in the intelligent cockpit domain 21 may receive a button operation instruction sent by the steering wheel button ECU 312, and control the dashboard display 102 to switch displayed driving information. For example, the intelligent cockpit DCU 24 may control the dashboard display 102 to switch to display different gauges, including but not limited to an odometer, a tachometer, an oil pressure gauge, a water temperature gauge, a fuel gauge, and a charging gauge.

It may be understood that the button structure of the steering wheel 103 shown in this embodiment of this application does not constitute a specific limitation on the steering wheel button. The function operation button and the mode switch button on the steering wheel 103 may include more or fewer buttons than those shown in the figure, or some buttons may be combined, or some buttons may be split, or different button arrangements may be used. For example, the steering wheel 103 may be in a form of a combination of a press-type button and a group of up, down, left, right, and center press-type buttons, or a combination of a scroll button and a group of up, down, left, right, and center press-type buttons, or a combination of two groups of up, down, left, right, and center press-type buttons. The mode switch button and the function operation button on the steering wheel 103 may be on a same side of the steering wheel 103, or may be on different sides of the steering wheel 103. The function operation button may also be a group of up, down, left, and right press-type buttons, or may be a group of left and right press-type buttons. Styles, locations, and corresponding operation manners of the mode switch button and the function operation button are not described herein again. All invention ideas provided based on this application fall within the protection scope of this application.

For ease of description and better understanding, in subsequent embodiments of this application, a steering wheel button structure shown in FIG. 4A is specifically used as an example to describe a method for operating a cockpit function by using a steering wheel button in embodiments of the present invention. Persons skilled in the art should understand that, for a cockpit function operation method in another button structure, reference may be made to the operation method in the steering wheel button structure shown in FIG. 4A. An implementation method for another steering wheel button structure is not described in detail in this application.

In some embodiments, the mode switch button 401 on the steering wheel 103 may be configured to change the cockpit function bound to the function operation button 402. The cockpit function bound to the function operation button 402 may be switched in cockpit functions corresponding to cockpit function options included in the cockpit function list. The cockpit function list may be set by the user. The user may adjust, by adjusting the cockpit function list, a cockpit function that can be bound to the function operation button. In this way, the user may adjust the cockpit function list according to a requirement, so that the cockpit function list includes a cockpit function option corresponding to a cockpit function frequently used by the user.

The following specifically describes a scenario in which a cockpit function list is set according to this application.

FIG. 5A to FIG. 5F are examples of diagrams of scenarios in which a cockpit function list is set.

In some embodiments, the intelligent cockpit DCU 24 may display a user interface 500 shown in FIG. 5A on the vehicle-mounted display 101. The user interface 500 may be displayed by the intelligent cockpit DCU 24 in response to an operation, for example, a press and hold operation, performed by a user on the mode switch button 401 shown in FIG. 4A. A manner of triggering the intelligent cockpit DCU 24 to display the user interface 500 on the vehicle-mounted display 101 is not limited in embodiments of this application.

As shown in FIG. 5A, the user interface 500 may include a function list display area 501, an alternative cockpit function area 502, and a title bar 503.

A title of the user interface 500 may be displayed on the title bar 503.

A list item control corresponding to a cockpit function option included in the current cockpit function list may be displayed in the function list display area 501. The list item control may include an icon and a name of a cockpit function, to help the user understand the cockpit function option corresponding to the list item control. For example, the function list display area 501 may include a media playback control list item control 504, an air conditioner function list item control 505, and an audio source switch list item control 506. This may indicate that the current cockpit function list includes a media playback control function option, an air conditioner function option, and an audio source switch function option. In this case, the mode switch button 401 may control the cockpit function bound to the function operation button 402 to switch among a media playback control function, an air conditioner function, and an audio source switch function.

The alternative cockpit function area 502 may display a plurality of option controls. One option control may correspond to one cockpit function option. The option control may be used to add the cockpit function option corresponding to the option control to the cockpit function list, or remove the cockpit function option from the cockpit function list. For example, the plurality of option controls may include: a media playback control option control 507, an air conditioner function option control 508, a shortcut combination option control 509, an audio source switch option control 510, a group travel option control 511, a quick reply option control 512, and the like. An icon and a name of the cockpit function corresponding to the option control may be displayed below the option control. The media playback control option control 507 is used as an example. The media playback control option control 507 may include a check box control 513 and cockpit function information corresponding to the media playback control function option. The cockpit function information corresponding to the media playback control function option may include a song name, an artist name, and an album pattern.

The check box control 513 may indicate whether the media playback control function option is added to the cockpit function list. For example, when the check box control 513 is in a selected state, it may indicate that the media playback control function option has been added to the cockpit function list. When the check box control 513 is in an unselected state, it may indicate that the media playback control function option is not added to the cockpit function list. A display style in which the check box control 513 is in the selected state may be that a "tick" identifier ("√") is displayed in the check box control 513. A display style in which the check box control 513 is in the unselected state may be that the check box control 513 is empty. The display style in which the check box control 513 is in the selected state or the unselected state is not limited in embodiments of this application. It can be learned that, when the check box control 513 included in the media playback control option control 507 is in the selected state, the intelligent cockpit DCU 24 may display the media playback control list item control 504 in the function list display area 501 of the user interface 500.

The air conditioner function option control 508 may correspond to the air conditioner function option. The air conditioner function option control 508 may include cockpit function information corresponding to the air conditioner function option and a check box control 514. The cockpit function information corresponding to the air conditioner function option may include operation information (for example, rolling up or down the function operation button to control a temperature, and pushing left or right the function operation button to control a wind speed) and parameter information (for example, a specified temperature) of the air conditioner function. The operation information and the parameter information may be displayed in a form of a combination of a pattern and a text. For example, a form in which one control is in the center and other controls are in the upper, lower, left, and right sides of the center control may be used, and the other controls are referred to as an up control, a down control, a left control, and a right control in the following. The center control may display a specified temperature of an air conditioner. The up control and the down control display a plus sign icon and a minus sign icon, indicating that rolling up the function operation button 402 may increase the specified temperature of the air conditioner, and rolling down the function operation button 402 may decrease the specified temperature of the air conditioner. The left control and the right control may display icons for decreasing the wind speed and increasing the wind speed, indicating that pushing left the function operation button 402 may decrease the wind speed of the air conditioner, and pushing right the function operation button 402 may increase the wind speed of the air conditioner.

The check box control 514 may indicate whether the air conditioner function option is selected into the cockpit function list. The intelligent cockpit DCU 24 may control the vehicle-mounted display 101 to display, in the function list display area 501, the air conditioner function list item control 505 corresponding to the air conditioner function option, to indicate that the current air conditioner function option is selected into the cockpit function list.

For descriptions of other cockpit function option controls, refer to the foregoing descriptions of the media playback control option control 507 and the air conditioner function option control 508. Details are not described herein again.

In some embodiments, the user interface 500 may further include an information display control 515. In response to an operation of tapping the information display control 515 by the user, the intelligent cockpit DCU 24 may control the vehicle-mounted display 101 to display another user interface for setting the cockpit function list. Content displayed in response to the operation on the information display control 515 is described in subsequent embodiments, and details are not described herein.

In some embodiments, before controlling the vehicle-mounted display 101 to display the user interface 500, the intelligent cockpit DCU 24 may first read the cockpit function list stored in a memory. The intelligent cockpit DCU 24 may determine, based on the cockpit function option in the cockpit function list, a status of the check box control and a list item control included in the function list display area 501.

It may be understood that a cockpit function option corresponding to the cockpit function list item control in the function list display area 501 is a cockpit function option currently included in the cockpit function list. In response to an operation on the mode switch button on the steering wheel, the intelligent cockpit DCU 24 may adjust, based on the cockpit function list, the cockpit function bound to the function operation button.
1. (FIG. 5A to FIG. 5D) A cockpit function option is added to or removed from the cockpit function list. It can be learned from FIG. 5A that a check box control included in the group travel option control 511 is in an unselected state. This may indicate that the cockpit function list currently does not include the group travel function option.

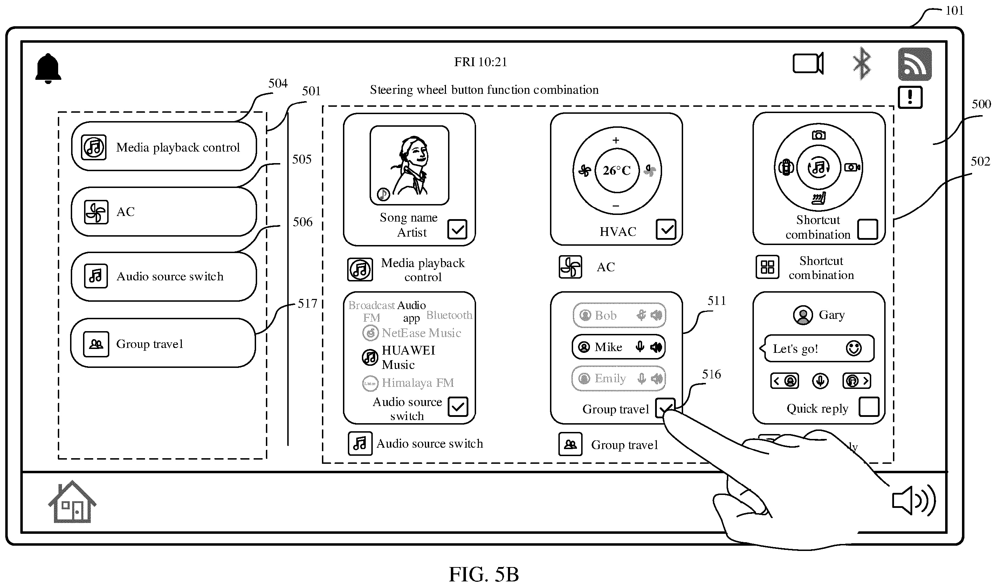

As shown in FIG. 5B, in response to an operation on the check box control 516 in the group travel option control 511, the intelligent cockpit DCU 24 may control the vehicle-mounted display 101 to change the check box control 516 from the unselected state to a selected state, and display a group travel list item control 517 in the function list display area 501. The intelligent cockpit DCU 24 may further update the cockpit function list, and add the group travel function option to the cockpit function list.

In some embodiments, in response to an operation of dragging and dropping the group travel option control 511 to the function list display area 501, the intelligent cockpit DCU 24 may control the vehicle-mounted display 101 to display the group travel list item control 517 in the function list display area 501. Correspondingly, the check box control 516 is changed from the unselected state to the selected state. In other words, the user may drag and drop the group travel option control 511 to the function list display area 501, to add the group travel function option to the cockpit function list. The intelligent cockpit DCU 24 may further update the cockpit function list, and add the group travel function option to the cockpit function list.

In some embodiments, when the check box control 516 in the group travel option control 511 is in the selected state, in response to an operation on the check box control 516, the intelligent cockpit DCU 24 may control the vehicle-mounted display 101 to change the check box control 516 from the selected state to the unselected state. Then, the intelligent cockpit DCU 24 may remove the group travel list item control 517 from the function list display area 501. The intelligent cockpit DCU 24 may further update the cockpit function list, and remove the group travel function option from the cockpit function list.

In some other embodiments, in response to an operation of pressing and holding the group travel list item control 517 and dragging and dropping the group travel list item control 517 out of the function list display area 501 by the user, the intelligent cockpit DCU 24 may control the vehicle-mounted display 101 to remove the group travel list item control 517 from the function list display area 501. Correspondingly, the check box control 516 in the group travel option control 511 is changed from the selected state to the unselected state. The intelligent cockpit DCU 24 may further update the cockpit function list, and remove the group travel function option from the cockpit function list. As shown in FIG. 5B, the function list display area 501 may include the media playback control list item control 504, the air conditioner function list item control 505, the audio source switch list item control 506, and the group travel list item control 517. Content of the cockpit function list stored in the intelligent cockpit DCU 24 may be shown in Table 1.

**Table 1**

| Index | Cockpit function |
|---|---|
| 1 | Media playback control |
| 2 | Air conditioner function |
| 3 | Audio source switch |
| 4 | Group travel |

As shown in Table 1, the sequence of the cockpit function options in the cockpit function list from front to back may be: the media playback control function option, the air conditioner function option, the audio source switch option, the group travel option, and a shortcut combination function option. The first column of Table 1 is the index in the cockpit function list. When the mode switch button 401 is used to switch the cockpit functions, the cockpit functions may be sequentially switched backward according to a numeric sequence of the indexes. In this case, when the cockpit function currently bound to the function operation button is the media playback control function corresponding to the media playback control function option, in response to an operation of pressing the mode switch button 401 once by the user, the intelligent cockpit DCU 24 may receive a button operation instruction sent by the steering wheel button ECU 312, and switch the cockpit function bound to the function operation button 402 to an option next to the media playback control function option, namely, the air conditioner function corresponding to the air conditioner function option. In some embodiments, when the function operation button 402 is bound to a cockpit function corresponding to the last cockpit function option in the current cockpit function list, the intelligent cockpit DCU 24 receives an operation performed on the mode switch button 401 again, and may return to the first cockpit function in the cockpit function list. In other words, when the cockpit function corresponding to the cockpit function option is switched, the cockpit function list may be a cyclic list. For example, when the cockpit function currently bound to the function operation button 402 is a group travel function corresponding to the group travel option, in response to an operation of pressing the mode switch button 401 once by the user, the intelligent cockpit DCU 24 may receive a button operation instruction sent by the steering wheel button ECU 312, and switch the cockpit function bound to the function operation button 402 to a cockpit function corresponding to the first cockpit function option in the cockpit function list, namely, the media playback control function corresponding to the media playback control function option. Persons skilled in the art may understand that the cockpit function list shown in Table 1 may include more or fewer cockpit function options, or may include more or less information. A storage manner and content of the cockpit function list shown in Table 1 in the vehicle 100 are merely used as an example for description, and should not be construed as a limitation on embodiments of this application.

It may be understood that for a method for adding another cockpit function option to or removing another cockpit function option from the cockpit function list, reference may be made to the descriptions of the foregoing method for adding the group travel function option to or removing the group travel function option from the cockpit function list. Details are not described herein again. In this embodiment of this application, the method for adding the cockpit function option to or removing the cockpit function option from the cockpit function list is merely an example for description in this application, and should not constitute a limitation on this application.

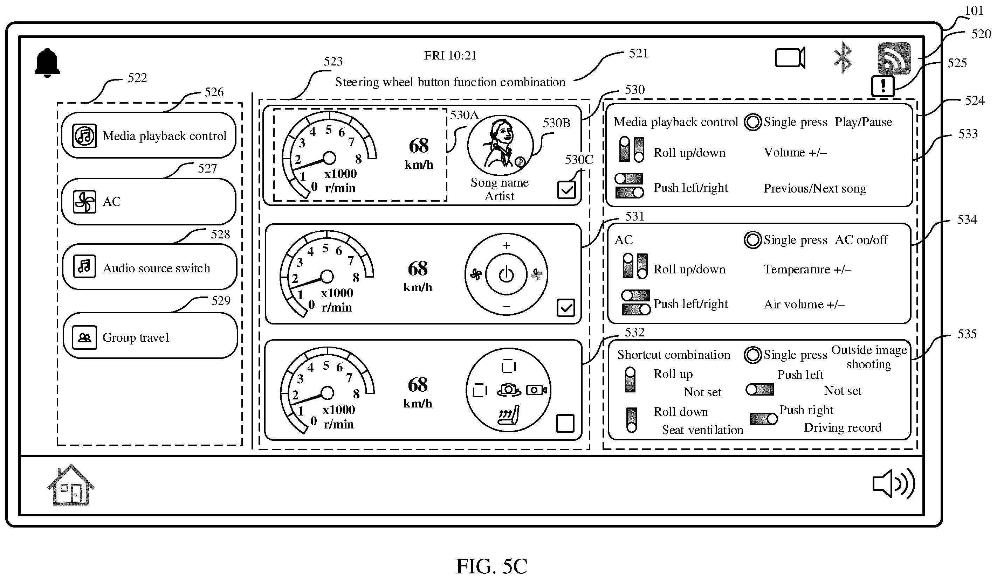

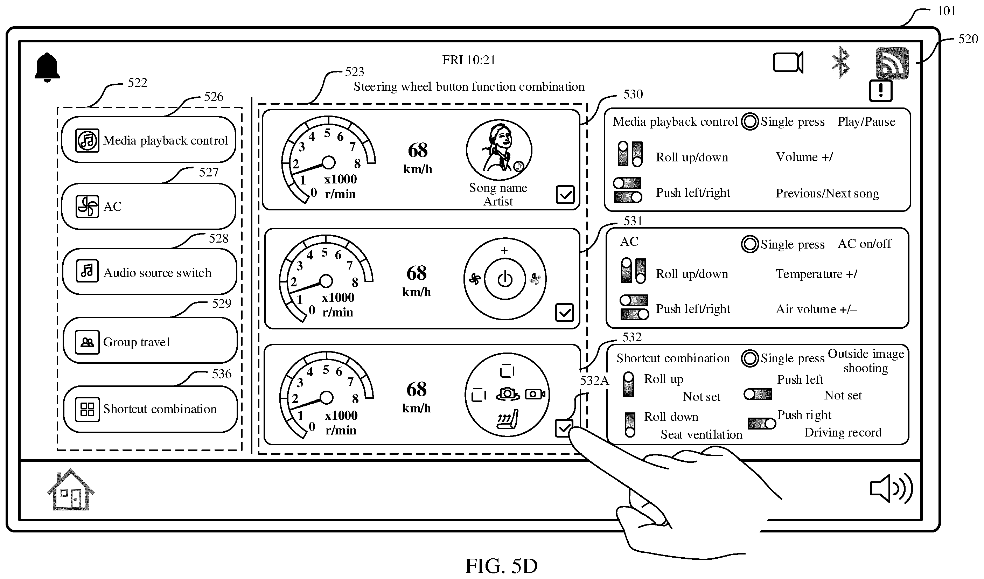

FIG. 5C and FIG. 5D schematically show another scenario in which the cockpit function list is set.

In some embodiments, in response to an operation of tapping the information display control 515 shown in FIG. 5A by the user, the intelligent cockpit DCU 24 may control the vehicle-mounted display 101 to display a user interface 520.

In some other embodiments, the user interface 520 may be displayed by the intelligent cockpit DCU 24 in response to an operation, for example, a press and hold operation, performed by the user on the mode switch button 401 shown in FIG. 4A. A manner of triggering the intelligent cockpit DCU 24 to display the user interface 520 on the vehicle-mounted display 101 is not limited in embodiments of this application.

The user interface 520 may include a title bar 521, a function list display area 522, a preview area 523, an operation information area 524, and an information display control 525.

The title bar 521 may display a title of the user interface 520.

The function list display area 522 may be used to display a cockpit function option included in the current cockpit function list. The function list display area 522 may include a plurality of cockpit function list item controls. Each cockpit function list item control corresponds to one cockpit function option. The cockpit function option may correspond to one or more cockpit functions. For example, the function list display area 522 may include a media playback control list item control 526, an air conditioner function list item control 527, an audio source switch list item control 528, and a group travel list item control 529. For display content of the function list display area and related operations of a list item control, refer to the descriptions of the function list display area 501 in the user interface 500 shown in FIG. 5A. Details are not described herein again.

The preview area 523 may include one or more preview controls. The preview control may include content that is displayed on the dashboard display 102 and that is of the cockpit function bound to the function operation button 402. The preview area 523 may include a media playback control preview control 530, an air conditioner preview control 531, and a shortcut combination preview control 532.

For example, the media playback control preview control 530 may be used by the user to preview content that is displayed on the dashboard display 102 when the media playback control function is bound to the function operation button 402. The media playback control preview control 530 may include one or more pieces of driving information 530A displayed on the dashboard display 102, cockpit function information 530B corresponding to the media playback control function, and a check box control 530C. Specifically, the driving information 530A may include a tachometer and a vehicle speed. The cockpit information of the media playback control function may include an album pattern, a song name, and an artist name of a song that is being played currently.

The check box control 530C may indicate whether the media playback control function option is added to the cockpit function list. In response to an operation of tapping the check box control 530C by the user, the intelligent cockpit DCU 24 may add or remove the media playback control function option corresponding to the media playback control preview control to or from the cockpit function list. For a description of the check box control, refer to the descriptions of the check box control in the foregoing embodiment. Details are not described herein again.

For content of another cockpit function preview control, refer to the foregoing descriptions of the media playback control preview control 530. Details are not described herein again.

The operation information area 524 may include one or more operation information controls. The operation information control can display a binding relationship between an operation manner of a cockpit function and a control item. The user may learn, according to the foregoing binding relationship, cockpit function control items corresponding to different operation manners of the function operation button 402. The operation information area 524 may include a media playback control operation information control 533, an air conditioner operation information control 534, and a shortcut combination operation information control 535.

For example, the media playback control operation information control 533 may display an operation method of the media playback control function, for example, may separately display content of a media playback control function that can be controlled when the function operation button 402 is pressed once, rolled up or down, or pushed left or right. The function operation button 402 may be pressed once to control playing and pausing of the current media, the function operation button 402 may be rolled up or down to control increasing or decreasing of the media volume, and the function operation button 402 may be pushed left or right to control the media to be switched to a previous song or a next song.

In some embodiments, display locations of a preview control and an operation information control that correspond to a same cockpit function option on the user interface 520 may be associated. For example, the media playback control operation information control 533 may be displayed on a right side of the media playback control preview control 530. The air conditioner operation information control 534 may be displayed on a right side of the air conditioner preview control 531. The shortcut combination operation information control 535 may be displayed on a right side of the shortcut combination preview control 532.

In addition to the preview controls and the operation information controls shown in FIG. 5C, the user interface 520 may include preview controls and operation information controls corresponding to more cockpit function options. For example, in response to an operation of sliding upward in the preview area 523 or the operation information area 524 by the user, the intelligent cockpit DCU 24 may control the vehicle-mounted display 101 to display a preview control and an operation information control corresponding to another cockpit function option. For display content and operation manners of the preview control and the operation information control corresponding to the another cockpit function option, refer to the descriptions of the preview control and the operation information control corresponding to the media playback control function, the air conditioner function, or the shortcut combination function. Details are not described herein again.

As shown in FIG. 5D, in response to an operation performed by the user on a check box control 532A of the shortcut combination preview control 532 in the preview area 523, the intelligent cockpit DCU 24 may control the vehicle-mounted display 101 to display the check box control 532A from an unselected state to a selected state. Correspondingly, the intelligent cockpit DCU 24 may control the vehicle-mounted display 101 to display, in the function list display area 522, the shortcut combination list item control 536 corresponding to the shortcut combination function option. The media playback control list item control 526, the air conditioner function list item control 527, the audio source switch list item control 528, and the group travel list item control 529 that are included from top to bottom in the function list item controls displayed in the function list display area 522 are changed to the media playback control list item control 526, the air conditioner function list item control 527, the audio source switch list item control 528, the group travel list item control 529, and the shortcut combination list item control 536.

In some embodiments, in response to an operation like adding or removing the cockpit function list item control to or from the function list display area 522 by the user, the intelligent cockpit DCU 24 may store the cockpit function list. For example, a method for storing the cockpit function list may be shown in Table 2.

Content of the cockpit function list stored in the intelligent cockpit DCU 24 may be shown in Table 2.

**Table 2**

| Index | Cockpit function |
|---|---|
| 1 | Media playback control |
| 2 | Air conditioner function |
| 3 | Audio source switch |
| 4 | Group travel |
| 5 | Shortcut combination |

As shown in Table 2, the cockpit functions stored in the current cockpit function list may be the media playback control, the air conditioner function, the audio source switch, the group travel, and the shortcut combination from front to back. For content of the cockpit function list shown in Table 2 and a cockpit function switching method, refer to the descriptions in Table 1. Details are not described herein again.

In some embodiments, the user may set the cockpit function list by using another device other than the vehicle 100, for example, a mobile phone or a tablet computer. For example, the vehicle management application of the electronic device on the user side may display interfaces shown in the user interface 500 and the user interface 520. In response to a command performed by the user on the user-side electronic device to modify the cockpit function list, the TSP may send a request instruction to the T-box 311. After obtaining the request command for the cockpit function list, the T-box 311 may send a request packet through the CAN bus 314. After receiving the request packet, the intelligent cockpit DCU 24 may store a cockpit function list modified by the user, and control the T-box 311 to feed back an operation result to the vehicle management application on the user-side electronic device.

In some embodiments, in response to a tap operation performed by the user on the information display control 525 in the user interface 520, the intelligent cockpit DCU 24 may control the vehicle-mounted display 101 to display the user interface 500 shown in FIG. 5A.

In some embodiments, before controlling the vehicle-mounted display 101 to display the user interface 520, the intelligent cockpit DCU 24 may first read a control item binding table stored in the memory, and display, based on cockpit function control items corresponding to different operation manners of the function operation button 402 in the control item binding table, cockpit function information displayed by a preview control in the preview area 523 and display content of an operation information control in the operation information area 524. The control item binding table may include a control item of a cockpit function, an operation manner of the function operation button 402, and a binding relationship between the control item and the operation manner. Each operation manner may correspond to a button operation instruction of the function operation button 402. When the control item is bound to the operation manner, in response to an operation that is performed by the user and that corresponds to an operation manner of the function operation button 402, the intelligent cockpit DCU may receive a button operation instruction corresponding to the operation manner. Further, the intelligent cockpit DCU may search the control item binding table for a control item bound to the operation manner, and control the control item of the cockpit function.

The foregoing embodiment may provide an entry for the user to more intuitively view an operation manner of each cockpit function, and the user may quickly preview content that is displayed on a display and that is of each cockpit function and the operation manner of the cockpit function. In this way, the user may determine whether to add or remove the cockpit function option to or from the cockpit function list. Correspondingly, the user may quickly select or deselect the cockpit function option by using the check box control. In response to an operation performed by the user on the check box control in the cockpit function option, the intelligent cockpit DCU 24 may store a cockpit function list adjusted by the user.

2. (FIG. 5E and FIG. 5F) A sequence of cockpit function options in the cockpit function list is adjusted.

In some embodiments, in response to an operation performed by the user on the mode switch button 401, the intelligent cockpit DCU 24 may switch a cockpit function bound to the function operation button 402 in the sequence of the cockpit function options in the cockpit function list. The sequence of the cockpit function options in the cockpit function list may be determined according to a sequence of the function list item controls in the function list display area 501 shown in FIG. 5A or the function list display area 522 shown in FIG. 5C.

As shown in FIG. 5E, in the function list display area 522, the sequence of the cockpit function list item controls from top to bottom may be: the media playback control list item control 526, the air conditioner function list item control 527, the audio source switch list item control 528, the group travel list item control 529, and the shortcut combination list item control 536. In other words, the sequence of the cockpit function options in the cockpit function list from front to back may be: the media playback control, the air conditioner function, the audio source switch, the group travel, and the shortcut combination.

In response to an operation of dragging and dropping the audio source switch list item control 528 to a location between the group travel list item control 529 and the shortcut combination list item control 536 by the user, the intelligent cockpit DCU 24 may control the vehicle-mounted display 101 to switch the group travel list item control 529 in the user interface 520 to the front of the audio source switch list item control 528. As shown in FIG. 5F, in the modified function list display area 522, the sequence of the cockpit function list item controls in the cockpit function list from top to bottom may be: the media playback control list item control 526, the air conditioner function list item control 527, the group travel list item control 529, the audio source switch list item control 528, and the shortcut combination list item control 536. In other words, the sequence of the cockpit function options in the modified cockpit function list from front to back may be: the media playback control, the air conditioner function, the group travel, the audio source switch, and the shortcut combination.

In some embodiments, in response to an operation of adjusting the sequence of the cockpit function list item controls in the function list display area 522 by the user, the intelligent cockpit DCU 24 may store the cockpit function list.

For example, content of the cockpit function list stored in the intelligent cockpit DCU 24 may be shown in Table 3.

**Table 3**

| Index | Cockpit function |
|---|---|
| 1 | Media playback control |
| 2 | Air conditioner function |
| 3 | Group travel |
| 4 | Audio source switch |
| 5 | Shortcut combination |

As shown in Table 3, the cockpit functions stored in the current cockpit function list may be the media playback control, the air conditioner function, the group travel, the audio source switch, and the shortcut combination from front to back. For content of the cockpit function list shown in Table 3 and a cockpit function switching method, refer to the descriptions in the foregoing embodiment. Details are not described herein again.

It may be understood that, for a method for adjusting a sequence of other cockpit function options in the cockpit function list, refer to the foregoing descriptions of adjusting the sequence of the audio source switch list item control 528. Details are not described herein again. In this embodiment of this application, a method for adjusting a sequence of cockpit function options in the cockpit function list is merely an example for description in this application, and should not constitute a limitation on this application.

In the user interface 500 shown in FIG. 5A, for a method for adjusting the sequence of the cockpit function list item controls in the function list display area 501, refer to the descriptions of the method for adjusting the sequence of the audio source switch list item control 528 in the user interface 520. Details are not described herein again.

In some embodiments, the intelligent cockpit DCU 24 may record time at which the user modifies the cockpit function list for the last time, and when preset time elapses after the last modification of the cockpit function list, the intelligent cockpit DCU 24 stores the cockpit function list to the memory. The preset time may be 10 seconds.

An implementation of storing the cockpit function list is not limited in embodiments of this application.

It may be understood that the user may adjust the sequence of the cockpit function options in the cockpit function list by using the vehicle-mounted display 101. In this way, the user may adjust the sequence of the cockpit function options in the cockpit function list based on a requirement, so that when the mode switch button 401 is used to adjust the cockpit function bound to the function operation button 402, the cockpit function bound to the function operation button 402 can be quickly switched to a cockpit function required by the user.

In some embodiments, in response to an operation performed by the user on any option control in the alternative cockpit function area 502 shown in FIG. 5A, for example, a tap operation, the intelligent cockpit DCU 24 may control the vehicle-mounted display 101 to display an interface for adjusting the control item binding table.

For example, the control item of the media playback control function may include: playing and pausing of a currently playing media, volume increasing, volume decreasing, rewinding playback of the playing media, fast-forward playback of the playing media, 0.5x speed playback of the playing media, 2x speed playback of the playing media, switching forward of the playing media, and switching backward of the playing media.

The user may adjust control items corresponding to different operation manners of the function operation button 402 in the control item binding table. In this way, the user may adjust, based on a requirement, a control item for operating a cockpit function by using the function operation button 402, so that the control item that can be operated by using the function operation button 402 conforms to a use habit of the user.

The following specifically describes a scenario in which a control item binding table of a cockpit function is set according to this application.

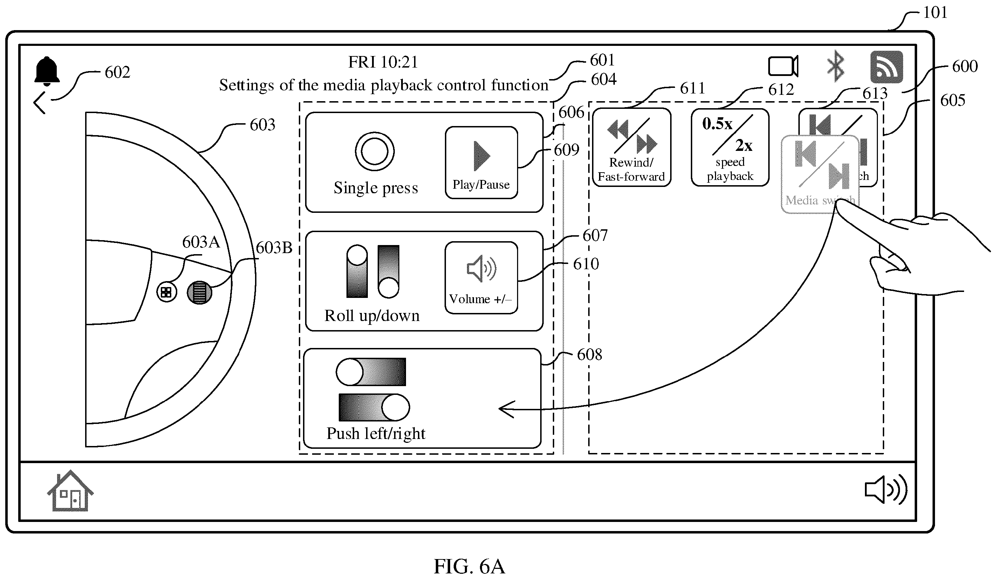

FIG. 6A to FIG. 6F are examples of diagrams of scenarios in which a control item binding table of a cockpit function is set.

In some embodiments, the intelligent cockpit DCU 24 may display a user interface 600 shown in FIG. 6A on the vehicle-mounted display 101.

The user interface 600 may be displayed by the vehicle-mounted display 101 controlled by the intelligent cockpit DCU 24 in response to tapping, by the user, the media playback control option control 507 in the alternative cockpit function area 502 shown in FIG. 5A. In another possible implementation, the user interface 600 may be displayed by the vehicle-mounted display 101 controlled by the intelligent cockpit DCU 24 in response to tapping, by the user, the media playback control operation information control 533 in the operation information area 524 shown in FIG. 5C. A manner of triggering the intelligent cockpit DCU 24 to display the user interface 600 on the vehicle-mounted display 101 is not limited in embodiments of this application.

As shown in FIG. 6A, the user interface 600 may include title information 601, a return control 602, a steering wheel preview image 603, an operation setting area 604, and a control item option area 605.

The title information 601 is used to display a title of the user interface 600.

The return control 602 is used to return to an upper-level interface of the user interface 600. In some embodiments, in response to an operation of tapping the return control 602 by the user, the intelligent cockpit DCU 24 may control the vehicle-mounted display 101 to display the user interface 500. In some other embodiments, in response to an operation of tapping the return control 602 by the user, the intelligent cockpit DCU 24 may control the vehicle-mounted display 101 to display the user interface 520. The user interface to which the return control 602 is used to return is not limited in embodiments of this application. The steering wheel preview image 603 is used to preview locations and styles of the mode switch button 401 and the function operation button 402 on the steering wheel 103, to more intuitively indicate a correspondence between a button and a function. The steering wheel preview image 603 may include a mode switch button preview image 603A and a function operation button preview image 603B. For example, the function operation button preview image 603B may be filled with a color, indicating that control items set by using the user interface 600 correspond to different operation manners of the function operation button 402 on the steering wheel 103.

The operation setting area 604 may include a plurality of operation controls. The operation control may include a control item control, configured to bind an operation manner of the function operation button 402 to a control item of a cockpit function. One operation control may correspond to one operation manner of the function operation button 402, or may correspond to a combination of a plurality of operation manners of the function operation button. For example, the operation setting area 604 may include a single press operation control 606, a roll up/down operation control 607, and a push left/right operation control 608. The single press operation control 606 corresponds to a single press operation on the function operation button 402, and may be used to set a control item of a media playback control function bound to the single press operation. The single press operation control 606 may display information such as an icon and a name of the single press operation. The single press operation control 606 may include a play/pause control item control 609. In this way, the intelligent cockpit DCU 24 may bind the single press operation in the media playback control function to a media play/pause control item. When the function operation button is bound to the media playback control function, the intelligent cockpit DCU 24 may receive a button operation instruction sent by the steering wheel button ECU 312 in response to single press performed by the user on the function operation button 402, and control the media playback control function to implement media play or pause.

The roll up/down operation control 607 corresponds to a combination of roll up and roll down operation manners of the function operation button 402, and may be used to set control items bound to the roll up and roll down operations in the media playback control function. The roll up/down operation control 607 may display icons and names of the roll up and roll down operations and a volume increase/decrease control item control 610. The volume increase/decrease control item control 610 corresponds to a control item combination of volume increase/decrease in the media playback control. The intelligent cockpit DCU 24 may bind the roll up operation on the function operation button 402 in the media playback control function to a volume increase control item, and bind the roll down operation on the function operation button 402 to a volume decrease control item. When the function operation button 402 is bound to the media playback control function, in response to an operation of rolling up the function operation button 402 by the user, the intelligent cockpit DCU 24 may receive a button operation instruction sent by the steering wheel button ECU 312, and control the volume of the currently played media to increase. Correspondingly, in response to an operation of rolling down the function operation button 402 by the user, the intelligent cockpit DCU 24 may receive a button operation instruction sent by the steering wheel button ECU 312, and control the volume of the currently played media to decrease.

The push left/right operation control 608 corresponds to a combination of push left and push right operations of the function operation button 402, and may be used to set a control item combination bound to the push left and push right operations in the media playback control function. The push left/right operation control 608 may be in a state in which a control item control is not included. In this way, when the function operation button 402 is bound to the media playback control function, in response to an operation of pushing left or right the function operation button 402 by the user, the intelligent cockpit DCU 24 may receive a button operation instruction sent by the steering wheel button ECU 312, and control the dashboard display 102 to display text or pattern information about content that the current operation is not bound to the media playback control.

In some embodiments, an operation control in the operation setting area 604 in the user interface 600 may correspond to more or fewer operation manners of the function operation button 402 than those shown in the figure, or combine some operation manners, or split some operation manners, or the like. For example, the operation setting area 604 may include a single press operation control, a roll up operation control, a roll down operation control, a push left operation control, and a push right operation control. Each operation control corresponds to an operation manner of the function operation button 402. In this way, the operation control may be used to singly set the control item bound to each operation manner. In this embodiment of this application, a method for setting the operation control is merely an example for description in this application, and should not constitute a limitation on this application.

The control item option area 605 may include one or more control item controls. One control item control may correspond to one control item of the media playback control function, or may correspond to a combination of a plurality of control items of the media playback control function. The control item control may be added to an operation control in the operation setting area 604. The control item option area 605 may include a rewind/fast-forward control item control 611, a speed playback control item control 612, and a media switching control item control 613.

The rewind/fast-forward control item control 611 may correspond to a control item combination of media rewind playback and media fast-forward playback in the media playback control function, and may be filled into an operation control corresponding to an operation combination. For example, the rewind/fast-forward control item control 611 may be filled into the roll up/down operation control 607. The intelligent cockpit DCU 24 may bind a rewind control item to the roll down on the function operation button 402, and bind a fast-forward control item to the roll up on the function operation button 402.

The speed playback control item control 612 may correspond to a control item combination of 0.5x speed and 2x speed playback in the media playback control function, and may be filled into an operation control corresponding to an operation combination.

The media switching control item control 613 may correspond to a control item combination of switching to previous playback content of the current media or switching to next playback content of the current media in the media playback control function, and may be controlled by an operation combination.

In some embodiments, the control item option area 605 in the user interface 600 may include more or fewer control item controls than those shown in the figure, or combine some control item controls, or split some control item controls, or the like. In this embodiment of this application, the control item control content in the control item option area 605 is merely an example for description in this application, and should not constitute a limitation on this application.

In response to a press and hold operation performed by the user on the media switching control item control 613, the media switching control item control 613 may be dragged and dropped to the push left/right operation control 608, and the intelligent cockpit DCU 24 may control the vehicle-mounted display 101 to display the media switching control item control 613 in the push left/right operation control 608. Correspondingly, the media switching control item control 613 in the control item option area 605 is no longer displayed.

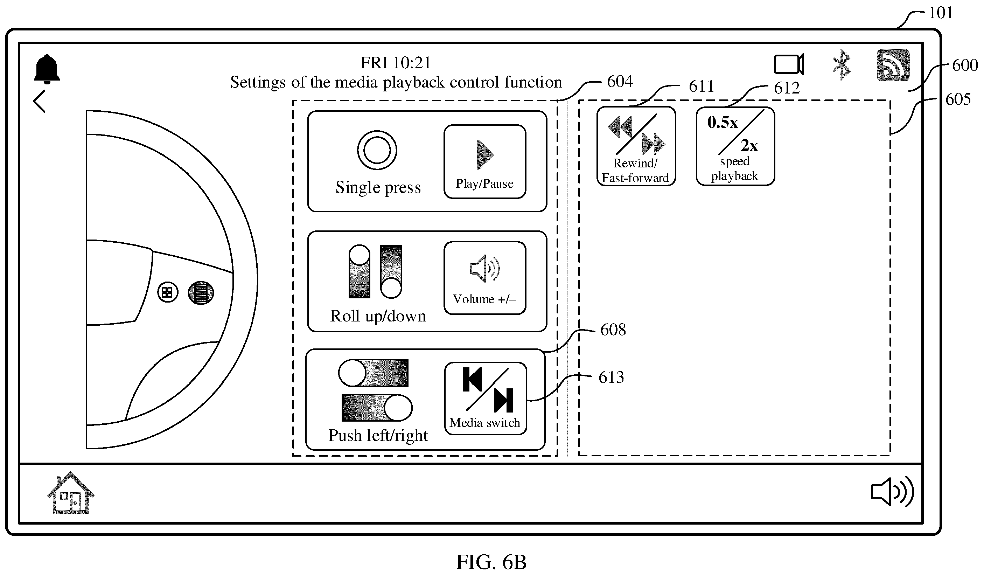

As shown in FIG. 6B, the control item controls in the modified control item option area 605 may include the rewind/fast-forward control item control 611 and the speed playback control item control 612. The media switching control item control 613 may be displayed in the push left/right operation control 608. The intelligent cockpit DCU 24 may bind the push left on the function operation button 402 in the media playback control function to the control item of switching to previous media, and bind the push right on the function operation button 402 in the media playback control function to the control item of switching to next media. When the function operation button 402 is bound to the media playback control function, in response to an operation of pushing left the function operation button 402 by the user, the intelligent cockpit DCU 24 may receive a button operation instruction sent by the steering wheel button ECU 312, and switch currently playing content of the media to previous playing content (for example, a previous song). In response to an operation of pushing right the function operation button 402 by the user, the intelligent cockpit DCU 24 may receive a button operation instruction sent by the steering wheel button ECU 312, and switch the currently playing content of the media to next playing content (for example, a next song).

Correspondingly, in response to a press and hold operation performed by the user on the media switching control item control 613 in the push left/right operation control 608, the media switching control item control 613 may be dragged and dropped out of the operation setting area 604. The intelligent cockpit DCU 24 may control the vehicle-mounted display 101 not to display the media switching control item control 613 in the push left/right operation control 608, and display the media switching control item control 613 in the control item option area 605. The intelligent cockpit DCU can delete the media switching control item combination bound to the push left/right operation combination in the media playback control function.

It may be understood that the user may add the control item control in the control item option area 605 to the operation setting control in the operation setting area 604 through the vehicle-mounted display 101. In this way, the operation of the function operation button 402 may be bound to the control item of the media playback control function. When the function operation button 402 is bound to the media playback control function, a corresponding operation may be used to control the control item of the media playback control function. Correspondingly, the user may also delete the control item control in the operation setting control from the operation control, to unbind the operation of the function operation button 402 from the control item. In this way, the user may adjust, based on a requirement, different operations to correspond to control items of a current cockpit function, so that when the function operation button 402 is used to operate the cockpit function, the cockpit function can be controlled based on the requirement of the user.

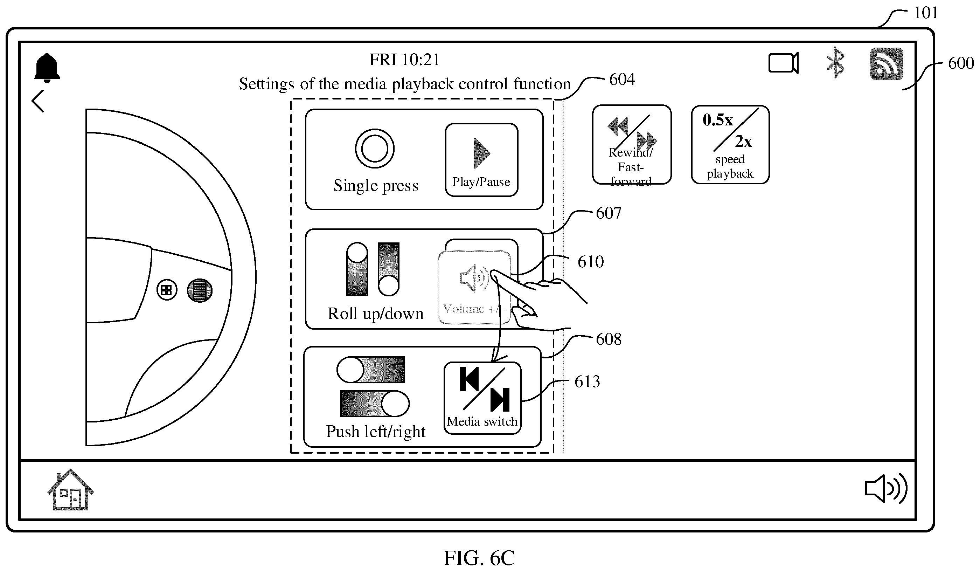

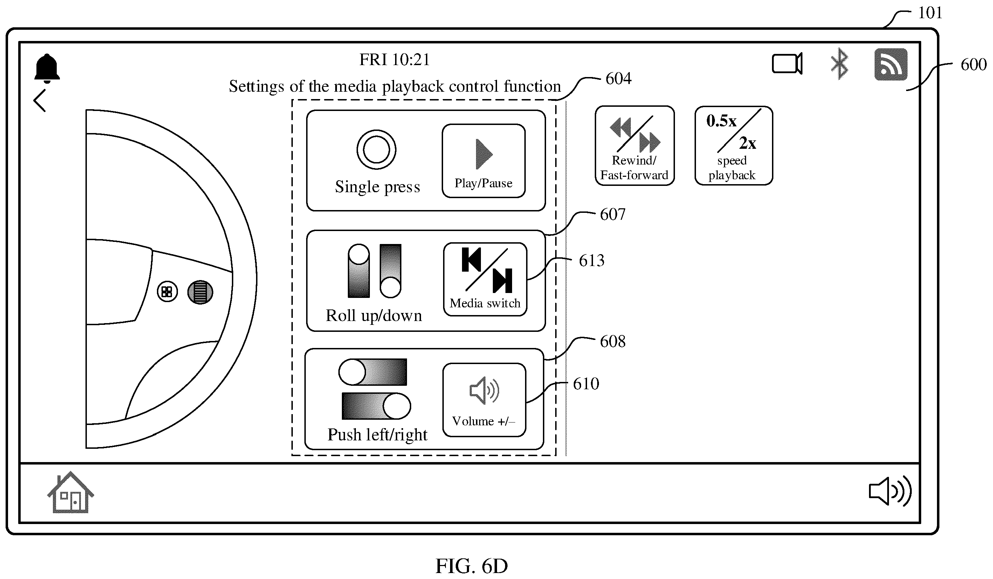

As shown in FIG. 6C, in some embodiments, in response to a press and hold operation performed by the user on the volume increase/decrease control item control 610 in the roll up/down operation control 607 in the operation setting area 604, the volume increase/decrease control item control 610 may be dragged and dropped to the push left/right operation control 608. The intelligent cockpit DCU 24 may control the vehicle-mounted display 101 to exchange locations of the volume increase/decrease control item control 610 in the roll up/down operation control 607 and the media switching control item control 613 in the push left/right operation control 608. As shown in FIG. 6D, after the exchange, a control item control displayed in the roll up/down operation control 607 changes from the volume increase/decrease control item control 610 to the media switching control item control 613, and a control item control displayed in the push left/right operation control 608 changes from the media switching control item control 613 to the volume increase/decrease control item control 610.

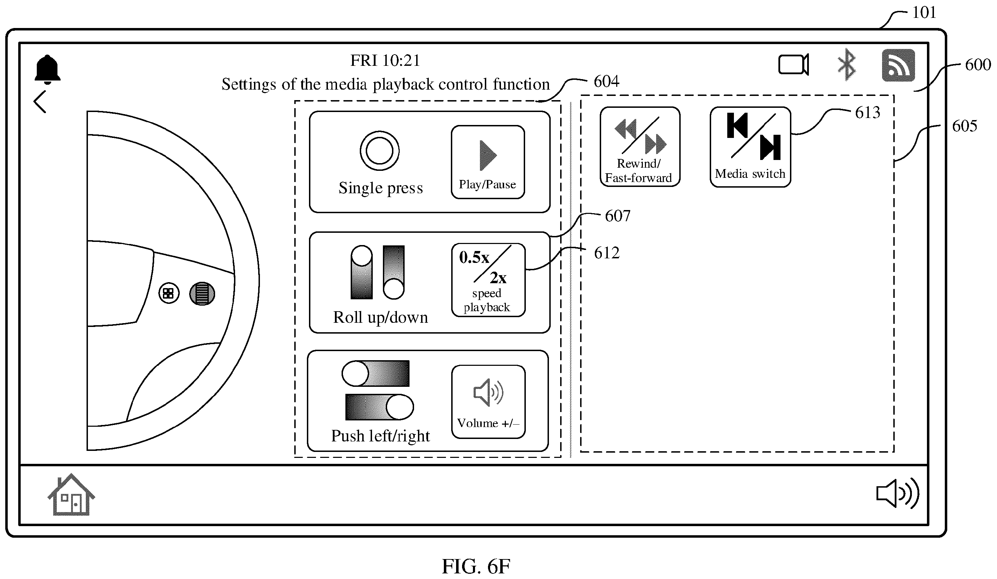

As shown in FIG. 6E, in some embodiments, in response to a press and hold operation performed by the user on the speed playback control item control 612 in the control item option area 605, the speed playback control item control 612 may be dragged and dropped to the roll up/down operation control 607, to exchange locations of the speed playback control item control 612 and the media switching control item control 613. As shown in FIG. 6F, the intelligent cockpit DCU 24 may control the vehicle-mounted display 101 to display the speed playback control item control 612 in the roll up/down operation control 607, and display the media switching control item control 613 in the control item option area 605.

It may be understood that, for a method for binding different operation manners of the function operation button 402 to corresponding control items under another cockpit function, reference may be made to the foregoing method for setting the media playback control function. For a method for adding, removing, or replacing a control item control in another cockpit function in an operation control, refer to the descriptions of the method for adding, removing, or replacing a control item control in the media playback control function in an operation setting control. Details are not described herein again. In this embodiment of this application, a method for setting cockpit function control items bound to different operation manners of the function operation button is merely an example for description in this application, and should not constitute a limitation on this application.

In some embodiments, in response to an operation of setting the control item binding table by the user in the user interface 600, the intelligent cockpit DCU 24 may store binding statuses between cockpit function control items and different operation manners of the function operation button 402.

For example, a control item control included in an operation control in the operation setting area 604 shown in FIG. 6F is used as an example, and content of the control item binding table stored in the intelligent cockpit DCU 24 may be shown in Table 4.

**Table 4**

| Operation manner of the function operation button | Control item of the media playback control function |
|---|---|
| Roll up | 0.5x speed playback |
| Roll down | 2x speed playback |
| Push left | Decrease volume of current media |
| Push right | Increase volume of the current media |
| Single press | When it is determined that the current media is in a playing state, pause playing the current media |
| | When it is determined that the current media is in a paused state, start to play the current media |

As shown in Table 4, the first column of Table 4 may store different operations of the function operation button 402, including operations of rolling up, rolling down, pushing left, pushing right, and pressing the function operation button 402. The second column of Table 4 may store control items of the media playback control function. An operation manner and a control item in the same line indicate that they are bound. For example, the roll up function operation button in Table 4 is bound to the 0.5x speed playback control item. When the control item control in the operation control is modified in the user interface 600, the intelligent cockpit DCU 24 may store, in the form of Table 4, the operation manner corresponding to the operation control and the control item corresponding to the control item control in the control item binding table. When the function operation button 402 is bound to the media playback control function, in response to different operations performed by the user on the function operation button 402, the intelligent cockpit DCU 24 may receive button operation instructions sent by the steering wheel button ECU 312, read the control item binding table shown in Table 4, search for a correspondence between the button operation and the media playback control function control item, and then control a control item corresponding to the foregoing operation. For example, in response to a roll up operation performed by the user on the function operation button 402, the intelligent cockpit DCU 24 may receive a button operation instruction sent by the steering wheel button ECU 312, and then read a control item corresponding to the roll up operation in the control item binding table. In this way, the intelligent cockpit DCU 24 may adjust a playing speed of the current media to 0.5x speed. A storage manner and content shown in Table 4 are merely used as an example for description, and should not be construed as a limitation on embodiments of this application.

In some other embodiments, the intelligent cockpit DCU 24 may record time at which the user modifies a filling relationship between a control item control and an operation control in the user interface 600 for the last time, and when preset time elapses after the last modification, the intelligent cockpit DCU 24 may change the control item binding table in the memory based on the control item control filled in the operation control. The preset time may be 10 seconds.

The following describes another scenario in which a control item binding table of a cockpit function is set according to an embodiment of this application.

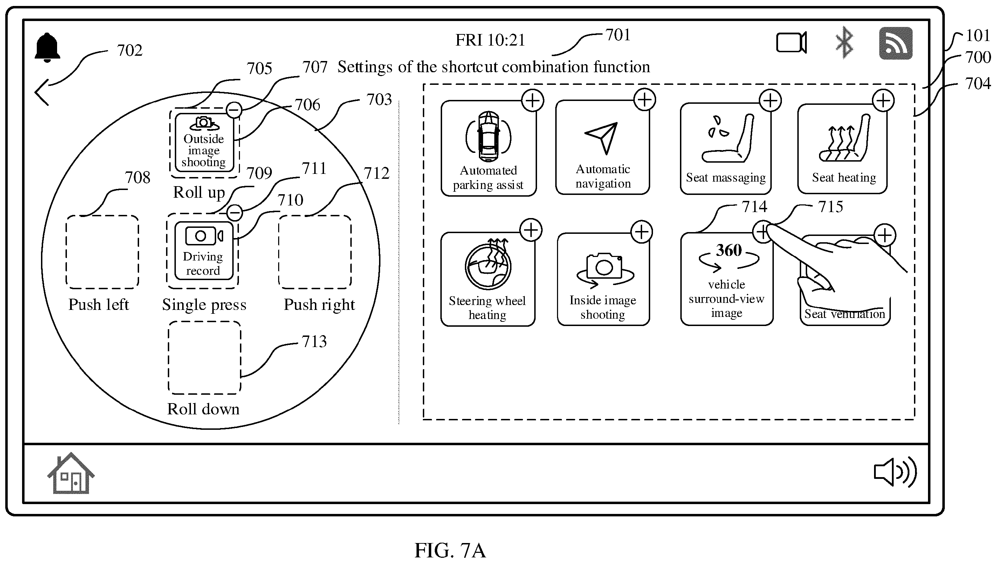

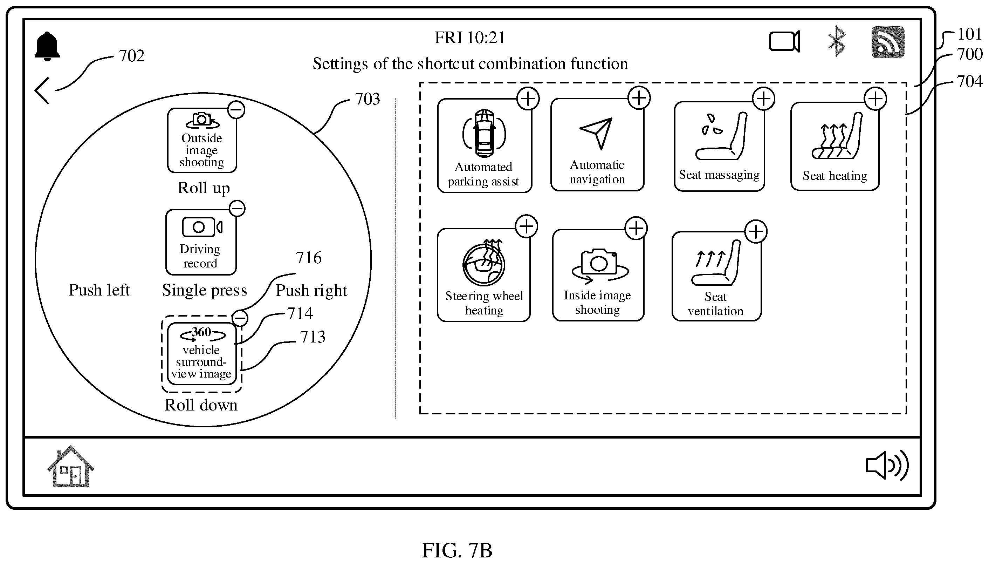

FIG. 7A and FIG. 7B are examples of diagrams of some other scenarios in which a control item binding table of a cockpit function is set.

In some embodiments, the intelligent cockpit DCU 24 may display a user interface 700 shown in FIG. 7A on the vehicle-mounted display 101. The user interface 700 may be displayed by the intelligent cockpit DCU 24 in response to a tap operation performed by the user on the shortcut combination option control 509 shown in FIG. 5A. In some other embodiments, in response to a tap operation performed by the user on the shortcut combination operation information control 535 shown in FIG. 5C, the intelligent cockpit DCU 24 may control the vehicle-mounted display 101 to display the user interface 700. A manner of triggering the intelligent cockpit DCU 24 to display the user interface 700 on the vehicle-mounted display 101 is not limited in embodiments of this application.

The user interface 700 may include title information 701, a return control 702, an operation setting area 703, and a control item option area 704.

The title information 701 may display a title of the user interface 700.

The return control 702 is used to return to an upper-level interface of the user interface 700. In some embodiments, in response to an operation of tapping the return control 702 by the user, the intelligent cockpit DCU 24 may control the vehicle-mounted display 101 to display the user interface 500. In some other embodiments, in response to an operation of tapping the return control 702 by the user, the intelligent cockpit DCU 24 may control the vehicle-mounted display 101 to display the user interface 520. The user interface to which the return control 702 is used to return is not limited in embodiments of this application.

The operation setting area 703 may be used to set control items corresponding to different operation manners of the function operation button 402. For example, the operation setting area 703 may include a filling area 705 corresponding to the roll up operation, an outside image shooting control item control 706 filled into the filling area 705, a delete control 707 in an upper right corner of the outside image shooting control item control 706, a filling area 708 corresponding to the push left operation, a filling area 709 corresponding to the single press operation, a driving record control item control 710 filled into the filling area 709, a delete control 711 in an upper right corner of the driving record control item control 710, a filling area 712 corresponding to the push right operation, and a filling area 713 corresponding to the roll down operation. An operation name corresponding to the filling area may be displayed below the filling area. For example, a word "roll up" may be displayed below the filling area 705 corresponding to the roll up. A word "push left" may be displayed below the filling area 708 corresponding to the push left. For an operation name that can be displayed below another filling area, refer to the operation names of the roll up and the push left. Details are not described herein again.

The outside image shooting control item control 706 may be filled into the filling area 705 corresponding to the roll up operation. Correspondingly, the intelligent cockpit DCU 24 may bind the roll up operation on the function operation button 402 to an outside image shooting control item.

In some embodiments, in response to an operation of tapping the delete control 707 by the user, the intelligent cockpit DCU 24 may delete the outside image shooting control item control 706 from the filling area 705. Correspondingly, the intelligent cockpit DCU 24 may control the vehicle-mounted display 101 to display the outside image shooting control item control 706 in the control item option area 704.

The driving record control item control 710 may be filled into the filling area 709 corresponding to the single press operation. Correspondingly, the intelligent cockpit DCU 24 may bind the single press operation on the function operation button 402 to a driving record control item. The delete control 711 may be configured to delete the driving record control item control 710 from the filling area 709.

The filling area 708 corresponding to the push left may be a state in which no control item control is filled, indicating that the push left operation on the function operation button 402 is not bound to a control item. Accordingly, the filling area 708 does not include a delete control.

For a control displayed in a filling area corresponding to another operation and a control manner of the control, refer to the descriptions of the filling areas corresponding to the roll up, the single press, and the push left. Details are not described herein again.

The control item option area 704 may include a plurality of control item controls of the shortcut combination function. For example, the control item option area 704 may include an automated parking assist control item control, an automatic navigation control item control, a seat massaging control item control, a seat heating control item control, a steering wheel heating control item control, an inside image shooting control item control, a vehicle surround-view image control item control 714, and a seat ventilation control item control.

An add control may be included in an upper right corner of a control item control, and configured to fill the control item control into a filling area in which no control item control is filled currently. For example, in some embodiments, in response to a tap operation performed by the user on the add control 715, the intelligent cockpit DCU 24 may query, in a sequence of the filling area 705 corresponding to the roll up, the filling area 713 corresponding to the roll down, the filling area 709 corresponding to the single press, the filling area 708 corresponding to the push left, and the filling area 712 corresponding to the push right, whether a control item control is filled into a filling area. When it is determined that the control item control is filled into the current filling area, a filling status of a next filling area is queried in the sequence. Until the intelligent cockpit DCU 24 finds a filling area in which no control item control is filled, the vehicle surround-view image control item control 714 is added to the filling area. When a control item control is filled into each filling area, filling in response to the tap operation performed by the user on the add control 715 is no longer performed. As shown in FIG. 7A, in response to a tap operation performed by the user on the add control 715, the intelligent cockpit DCU 24 may first determine a filling status of the filling area 705 corresponding to the roll up. Because the outside image shooting control item control 706 is filled in the filling area 705, the intelligent cockpit DCU 24 may continue to determine a filling status of the filling area 713 corresponding to the roll down. When the intelligent cockpit DCU 24 determines that no control item control is filled in the filling area 713 corresponding to the roll down, the vehicle surround-view image control item control 722 may be filled in the filling area 713.

In some embodiments, a corresponding operation manner of the filling area 705 corresponding to the roll up, the filling area 713 corresponding to the roll down, the filling area 709 corresponding to the single press, the filling area 708 corresponding to the push left, or the filling area 712 corresponding to the push right may be indicated by using a location relationship. For example, the filling area 709 corresponding to the single press may be in the middle. The filling area 705 corresponding to the roll up may be above the filling area 709. The filling area 713 corresponding to the roll down may be below the filling area 709. The filling area 708 corresponding to the push left may be on the left of the filling area 709. The filling area corresponding to the push right may be on the right of the filling area 709. The location relationship is not limited to the foregoing location relationship, and may be another location relationship. The location relationship of the filling area is not limited in embodiments of this application.

As shown in FIG. 7B, in response to the tap operation performed by the user on the add control 715 shown in FIG. 7A, the intelligent cockpit DCU 24 may control the vehicle-mounted display 101 to display the vehicle surround-view image control item control 714 in the filling area 713 corresponding to the roll down operation, and display a delete control 716 on the upper right of the vehicle surround-view image control item control 714. The vehicle surround-view image control item control 714 is no longer displayed in the control item option area 704 in response to the user operation. In this case, the control item option area 704 may include the automated parking assist control item control, the automatic navigation control item control, the seat massaging control item control, the seat heating control item control, the steering wheel heating control item control, the inside image shooting control item control, and the seat ventilation control item control.

In some embodiments, in response to a press and hold operation performed by the user on a control item control in the control item option area 704, the control item control may be dragged and dropped to a filling area in the operation setting area 703, and the intelligent cockpit DCU 24 may control the vehicle-mounted display 101 to perform filling and replacing in the filling area. In some embodiments, in response to a press and hold operation performed by the user on a control item control in the operation setting area 703, the control item control may be dragged and dropped to another filling area, and the intelligent cockpit DCU 24 may control the vehicle-mounted display 101 to perform filling and replacing in the filling area. In some other embodiments, in response to a press and hold operation performed by the user on a control item control in the operation setting area 703, the control item control may be dragged and dropped to the control item option area 704, and the intelligent cockpit DCU 24 may control the vehicle-mounted display 101 to delete the control item control in the filling area. For a method for adding, deleting, and replacing a control item control in the filling area of the operation setting area 703, refer to the descriptions of adding, deleting, and replacing a control item control in the operation control shown in FIG. 6A. Details are not described herein again.

In some embodiments, in response to an operation of filling, by the user, a control item control in filling areas corresponding to different operation manners in the user interface 700, the intelligent cockpit DCU 24 may store the control item binding table of the shortcut combination function.

For example, filling content of the operation control in the operation setting area 703 shown in FIG. 7B is used as an example, and the control item binding table that is of the shortcut combination function and that is stored in the intelligent cockpit DCU 24 may be shown in Table 5.

**Table 5**

| Operation manner of the function operation button | Control item of the shortcut combination function |
|---|---|
| Roll up | Outside image shooting |
| Roll down | Vehicle surround-view image |
| Push left | Null |
| Push right | Null |
| Single press | Driving record |

For content of Table 5, refer to the descriptions of the control item binding table of the media playback control function in the foregoing embodiment. Details are not described herein again. When the function operation button 402 is bound to the shortcut combination function, in response to different operations performed by the user on the function operation button 402, the intelligent cockpit DCU 24 may receive button operation instructions sent by the steering wheel button ECU 312, read the control item binding table shown in Table 5, and then control the control items of the shortcut combination function. For example, when the function operation button 402 is bound to the shortcut combination function, in response to a single press operation performed by the user on the function operation button 402, the intelligent cockpit DCU 24 may receive a button operation instruction sent by the steering wheel button ECU 312, search the control item binding table of the shortcut combination function shown in Table 5 for a driving record function corresponding to the single press operation, and control the dashcam ECU 34 to start the dashcam 35. Similarly, in response to a roll up operation performed by the user on the function operation button 402, the intelligent cockpit DCU 24 may receive a button operation instruction sent by the steering wheel button ECU 312, find out that a control item corresponding to the roll up operation in the control item binding table is the outside image shooting control item, and control a camera of the camera system 33 disposed outside the vehicle 100 to shoot an image. A storage manner and content shown in Table 5 are merely used as an example for description, and should not be construed as a limitation on embodiments of this application.

In some embodiments, the intelligent cockpit DCU 24 may record time at which the user fills a control item control in the filling areas corresponding to different operation manners in the user interface 700 for the last time, and when preset time elapses after the last modification of the function list, the intelligent cockpit DCU 24 may store the control item binding table corresponding to the current shortcut combination function to the memory. In some other embodiments, the intelligent cockpit DCU 24 may store, in response to a tap operation performed by the user on the return control 702, the control item binding table corresponding to the shortcut combination function to the memory based on the control item controls filled in the filling areas corresponding to different operation manners in the user interface 700. A manner of storing the control item binding table is not limited in embodiments of this application.

It may be understood that, for a method for setting a control item binding table for another cockpit function, reference may be made to the foregoing method for setting the control item binding table in the shortcut combination function. Details are not described herein again.

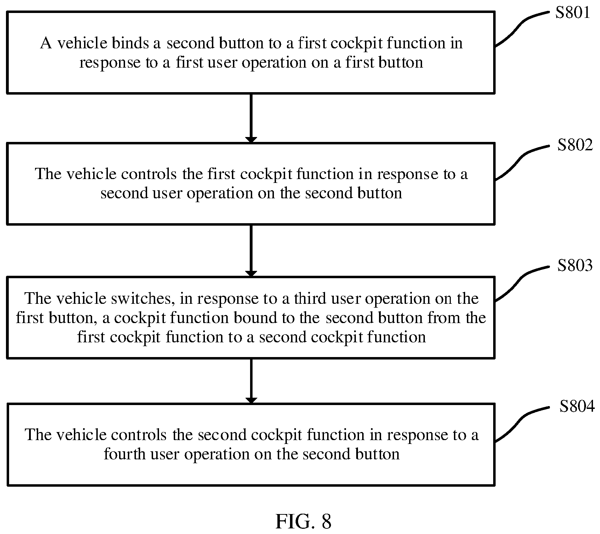

FIG. 8 is a schematic flowchart of a cockpit function operation method according to an embodiment.

As shown in FIG. 8, the cockpit function operation method provided in this embodiment may include but is not limited to the following steps.

S801: A vehicle binds a second button to a first cockpit function in response to a first user operation on a first button.

The first button may be referred to as a mode switch button. The second button may be referred to as a function operation button.

In some embodiments, in response to a single press operation performed by a user on the mode switch button 401, the intelligent cockpit DCU 24 in the vehicle 100 may bind the function operation button 402 to the first cockpit function.

S802: The vehicle controls the first cockpit function in response to a second user operation on the second button.

An operation manner of the second user operation may be rolling up the function operation button 402. In some embodiments, the operation manner of the second user operation may correspond to a control item that controls the first cockpit function. In response to the second user operation on the function operation button 402, the intelligent cockpit DCU 24 in the vehicle 100 may query a binding relationship between the operation manner of the second user operation and the control item in a control item binding table. In this way, the intelligent cockpit DCU 24 may control a corresponding control item.

S803: The vehicle switches, in response to a third user operation on the first button, a cockpit function bound to the second button from the first cockpit function to a second cockpit function.

An operation manner of the third user operation may be pressing the mode switch button 401 three times. The second cockpit function may be a function corresponding to a cockpit function option in a cockpit function list. The second cockpit function may be different from the first cockpit function.

In some embodiments, the intelligent cockpit DCU 24 in the vehicle 100 may perform backward search starting from the first cockpit function based on a quantity of times that the mode switch button 401 is pressed in the third user operation. The intelligent cockpit DCU 24 may search for a sequence of cockpit functions in a first cockpit function set, to determine that the function operation button 402 is bound to the second cockpit function.

S804: The vehicle controls the second cockpit function in response to a fourth user operation on the second button.

An operation manner of the fourth user operation may be the same as the operation manner of the second user operation, or may be different from the operation manner of the second user operation. In response to the fourth user operation on the second button, the intelligent cockpit DCU 24 in the vehicle may receive a button operation instruction sent by the steering wheel button ECU 312. In this way, the intelligent cockpit DCU 24 may control the second cockpit function based on the operation manner corresponding to the fourth user operation.

By using the cockpit function list and the control item binding table in the foregoing embodiment, the user may switch, by using the mode switch button 401, the cockpit function bound to the function operation button 402, and control, by using different operations on the function operation button 402, the cockpit function bound to the function operation button 402.

Based on the mode switch button and the function operation button, the following describes a scenario in which a cockpit function is operated according to an embodiment of this application.

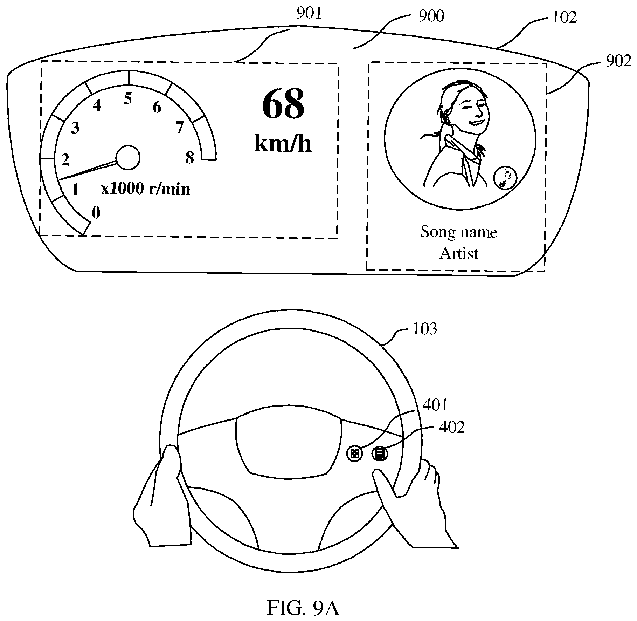

FIG. 9A to FIG. 9C show an example of a scenario in which a cockpit function is switched by using the mode switch button 401.

As shown in FIG. 9A, a user interface 900 may be displayed on the dashboard display 102. The user interface 900 may include a gauge information area 901 and a cockpit function information area 902.

The gauge information area 901 may display one or more pieces of driving information, for example, may display a tachometer and a vehicle speed, or may display a fuel gauge, an oil pressure gauge, a water temperature gauge, a charging gauge, and the like.

The cockpit function information area 902 may display cockpit function information corresponding to a current cockpit function.

In some embodiments, in response to a single press operation performed by a user on the mode switch button 401, the intelligent cockpit DCU 24 may receive a button operation instruction sent by the steering wheel button ECU 312, and sequentially select the cockpit function options in the cockpit function list. For example, a cockpit function list currently stored in the intelligent cockpit DCU 24 may be shown in Table 6.

**Table 6**

| Index | Cockpit function |
|---|---|
| 1 | Media playback control |
| 2 | Air conditioner function |
| 3 | Group travel |
| 4 | Audio source switch |
| 5 | Shortcut combination |

The cockpit function list shown in Table 6 may be a list stored in the intelligent cockpit DCU 24. The cockpit function list shown in Table 6 may be preset in the intelligent cockpit DCU 24 when the vehicle 100 is delivered from a factory, or may be set by the user. For a manner in which the user sets the cockpit function list shown in Table 6, refer to the descriptions in the foregoing embodiments. Details are not described herein again.

For example, as shown in FIG. 9A, a cockpit function currently bound to the function operation button 402 may be a cockpit function media playback control function corresponding to the first cockpit function option in the cockpit function list. The intelligent cockpit DCU 24 may control the dashboard display 102 to display cockpit function information of the media playback control function, so that the user can control the media playback control function. It can be learned that, in FIG. 9A, the cockpit function information area 902 may display the cockpit function information of the media playback control function. For example, a song name, an artist name, and an album picture of a song that is being played.

The intelligent cockpit DCU 24 may determine whether the user switches the cockpit function bound to the function operation button 402. When an operation performed on the mode switch button 401 is detected, the intelligent cockpit DCU 24 may determine that the user is switching the cockpit function bound to the function operation button 402. When it is determined that the user is switching the cockpit function bound to the function operation button, the intelligent cockpit DCU 24 may control the dashboard display 102 to display a switching menu, to prompt the user to switch to a cockpit function currently. In some embodiments, the switching menu may include a list including switch controls corresponding to one or more cockpit function options in the cockpit function list shown in Table 6. The switch controls may be arranged from top to bottom according to an index sequence of the cockpit function options in the cockpit function list. The switch controls may include icons and names of the cockpit functions.

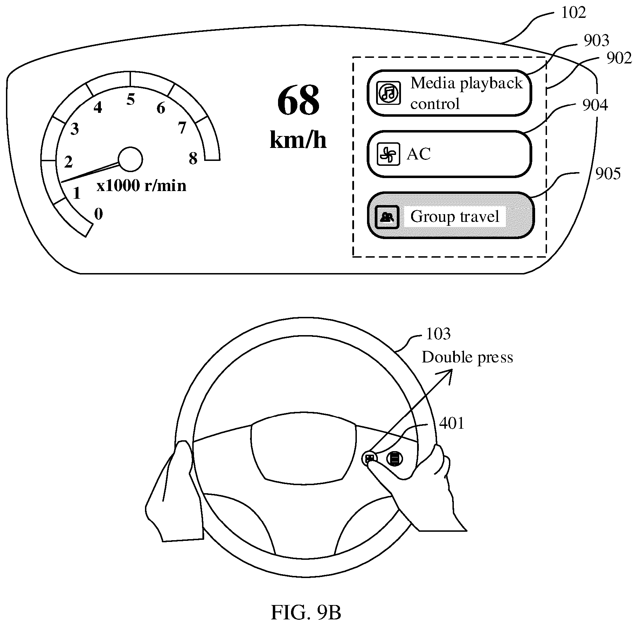

As shown in FIG. 9B, in response to a double press operation performed by the user on the mode switch button 401, the intelligent cockpit DCU 24 may receive a button operation instruction sent by the steering wheel button ECU 312, and determine that the user is switching the cockpit function bound to the function operation button 402. Then, the intelligent cockpit DCU 24 may control the dashboard display 102 to display the switching menu. The switching menu may include a media playback control switch control 903, an air conditioner function switch control 904, and a group travel switch control 905. When a switch control is selected, the intelligent cockpit DCU 24 controls the dashboard display 102 to deepen a color of the switch control. For example, after receiving a button operation instruction that is sent by the steering wheel button ECU 312 and that corresponds to the first press, the intelligent cockpit DCU 24 may control the dashboard display 102 to deepen the air conditioner function switch control 904, and cancel the deepened state of the media playback control switch control 903. After the intelligent cockpit DCU 24 receives a corresponding button operation instruction that is sent by the steering wheel button ECU 312 and that corresponds to the second press, the intelligent cockpit DCU 24 may control the dashboard display to cancel the deepened state of the air conditioner function switch control 904, and deepen the group travel switch control 905. The double press operation performed by the user on the mode switch button 401 shown in FIG. 9B may be the first user operation in this application.

In some embodiments, when the cockpit function bound to the function operation button 402 is being switched, the switch controls in the switching menu may be in a cyclic form. When switching to the last cockpit function option in the cockpit function list, in response to an operation performed by the user on the mode switch button 401, the intelligent cockpit DCU 24 may receive a button operation instruction sent by the steering wheel button ECU 312, and perform selection starting from the first cockpit function option in the cockpit function list. Correspondingly, the intelligent cockpit DCU 24 may control the dashboard display 102 to display switch controls corresponding to the first several cockpit function options in the cockpit function list. For example, in this application, the first cockpit function may be the group travel function, and the second cockpit function may be the media playback control function. In response to a triple press operation performed by the user on the mode switch button 401, the intelligent cockpit DCU 24 may receive a button operation instruction sent by the steering wheel button ECU 312, and control the dashboard display to display the switching menu including the media playback control switch control 903, the air conditioner function switch control 904, and the group travel switch control 905 again. In this way, the intelligent cockpit DCU 24 may bind the function operation button 402 to the media playback control function. In response to a roll up operation performed by the user on the function operation button 402, the intelligent cockpit DCU 24 may receive a button operation instruction sent by the steering wheel button ECU 312, and control the media playback control function to play media at 2x speed. The triple press operation performed by the user on the mode switch button 401 may be the third user operation in this application. The roll up operation performed by the user on the function operation button 402 may be the fourth user operation in this application. The switching menu may be the first list in this application.

In some embodiments, in response to an operation performed by the user on the mode switch button 401, the intelligent cockpit DCU 24 may receive a button operation instruction sent by the steering wheel button ECU 312, and search for a cockpit function option selected in response to the user operation. In this way, the intelligent cockpit DCU 24 may control a microphone to perform voice prompt on a name of a selected cockpit function option. In this way, the user can more quickly learn, by using the voice prompt, the cockpit function option selected after the user operates the mode switch button 401.

When the intelligent cockpit DCU 24 determines that the user ends cockpit function switching, the intelligent cockpit DCU 24 may control the dashboard display 102 to display cockpit function information of the last selected cockpit function. In some embodiments, the intelligent cockpit DCU 24 may use a user operation on the function operation button 402 as a flag for ending the cockpit function switching. In some other embodiments, the intelligent cockpit DCU 24 may store time in which the user uses the mode switch button 401, and use, as a flag of ending the cockpit function switching, that the user does not operate the mode switch button 401 or the function operation button 402 over preset time after the stored time. The preset time may be five seconds.

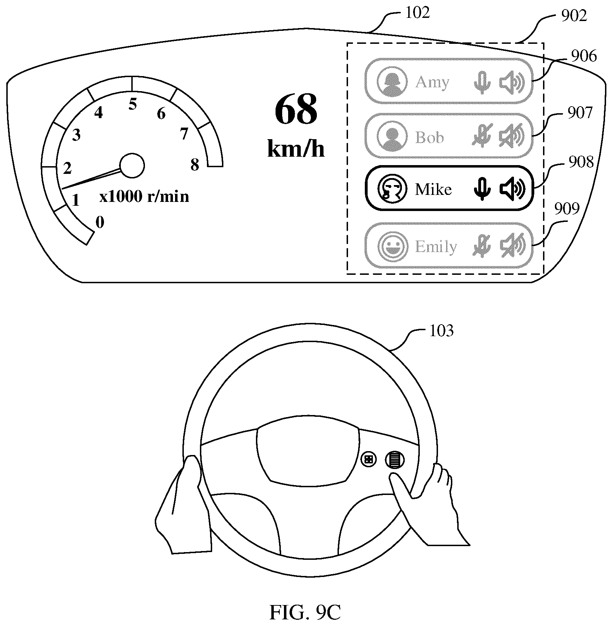

For example, when the user ends the cockpit function switching, the group travel switch control 905 shown in FIG. 9B may be in a selected state. This may represent that the function operation button 402 is currently bound to the group travel function through the operations of switching the cockpit function bound to the function operation button 402 shown in FIG. 9A and FIG. 9B. The intelligent cockpit DCU 24 may control the dashboard display 102 to display, in the cockpit function information area 902, cockpit function information of the group travel function shown in FIG. 9C.

As shown in FIG. 9C, the cockpit function information of the group travel function may include a list item of a fellow member. For example, the cockpit function information area 902 may display an Amy list item 906, a Bob list item 907, a Mike list item 908, and an Emily list item 909. The intelligent cockpit DCU 24 may control the dashboard display 102 to improve transparency of displaying the Amy list item 906, the Bob list item 907, and the Emily list item 909, so that display effect of the Mike list item 908 is more prominent. This may indicate that the user currently selects the Mike list item 908, to help the user operate. For example, the Amy list item 906 may include a profile picture of Amy, a nickname of Amy, a microphone icon of Amy, and a speaker icon of Amy.

The profile picture and the nickname of Amy indicate information of Amy.

The microphone icon of Amy indicates whether a microphone for talking with Amy is on. For example, when the microphone of Amy is in an on state, the intelligent cockpit DCU 24 may control a microphone in the vehicle 100 to collect a voice signal of a driver and a passenger, and send the voice signal to a device of Amy through the T-box 311. The device of Amy may be a mobile phone, a vehicle, or the like of Amy. When the microphone for talking with Amy is off, a slash may be displayed on the microphone icon, indicating that the microphone of Amy is not on currently. The intelligent cockpit DCU 24 may still control the microphone in the vehicle 100 to collect a voice signal of the driver and the passenger, but does not send the voice signal to the device of Amy. A display style in which the microphone icon is on or off is not limited in embodiments of this application. It can be seen that the microphone icon of Amy does not include a slash, which indicates that the microphone for talking with Amy is in the on state. In this case, the intelligent cockpit DCU 24 may control the microphone in the vehicle 100 to collect a voice signal of the driver and the passenger, and send the voice signal to Amy through the T-box 311.

The speaker icon of Amy indicates whether a speaker for talking with Amy is on. For example, when the speaker of Amy is in an on state, the intelligent cockpit DCU 24 may control the T-box 311 to receive voice information from Amy, and play the voice information of Amy through the speaker. When the speaker for talking with Amy is off, a slash may be displayed on the speaker icon, indicating that the speaker of Amy is not on currently. The intelligent cockpit DCU 24 can still receive voice information from Amy, but does not play the voice information of Amy through the speaker. A display style in which the speaker icon is on or off is not limited in embodiments of this application. It can be seen that the speaker icon of Amy does not include a slash, which indicates that the speaker for talking with Amy is in the on state. In this case, the intelligent cockpit DCU 24 may control the T-box 311 in the vehicle 100 to receive the voice information from Amy, and play the voice information of Amy through the speaker.

For content of another fellow member list item, refer to the descriptions of the content of the Amy list item 906. Details are not described herein again.

In some embodiments, the intelligent cockpit DCU 24 may store a binding relationship between the function operation button and a cockpit function. For example, the intelligent cockpit DCU 24 may store a function operation button binding table. The function operation button binding table may include the binding relationship between the function operation button and a cockpit function.

For example, the function operation button binding table stored in the intelligent cockpit DCU 24 may be in a form of Table 7.

**Table 7**

| | |
|---|---|
| Cockpit function currently bound to the function operation button | Group travel |

As shown in Table 7, the table may store the cockpit function currently bound to the function operation button 402. In response to an operation performed by the user on the function operation button 402, the intelligent cockpit DCU 24 may receive a button operation instruction sent by the steering wheel button ECU 312, and search the function operation button binding table shown in Table 7. The intelligent cockpit DCU 24 may determine that the cockpit function currently bound to the function operation button 402 is the group travel, and then control the group travel function based on the control item binding table. A storage manner and content of the function operation button binding table shown in Table 7 are merely used as an example for description, and should not be construed as a limitation on embodiments of this application.

When the user uses the mode switch button to bind the function operation button to a cockpit function required by the user, the user may use the function operation button to control the cockpit function.

The following describes a scenario in which a cockpit function is controlled by using the function operation button according to an embodiment of this application.

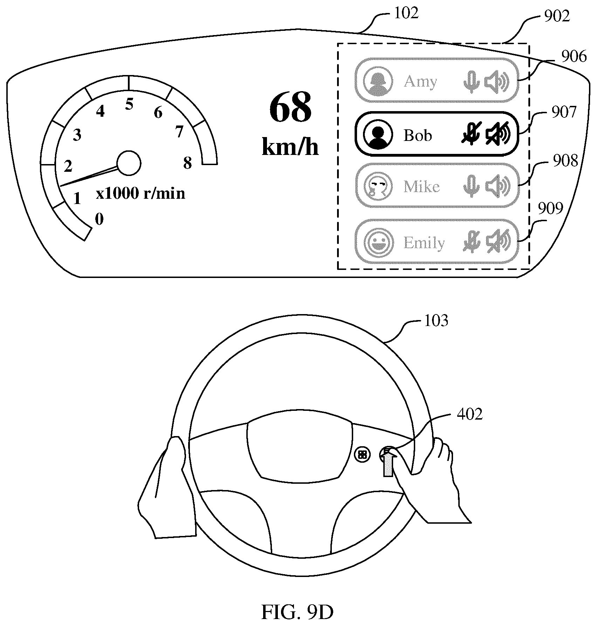

FIG. 9D to FIG. 9G show an example of a method for controlling a cockpit function by using the function operation button 402.

When the intelligent cockpit DCU 24 determines that the user ends the cockpit function switching, the intelligent cockpit DCU 24 may store a binding relationship between a cockpit function finally selected by the user and the function operation button. In response to an operation performed by the user on the function operation button 402 on the steering wheel 103, the intelligent cockpit DCU 24 may receive a button operation instruction sent by the steering wheel button ECU 312, and read the function control item binding table. The intelligent cockpit DCU 24 may control, based on an operation performed on the function operation button 402, a cockpit function currently bound to the function operation button 402.

As shown in FIG. 9D, in response to a roll up operation performed by the user on the function operation button 402, the intelligent cockpit may receive a button operation instruction sent by the steering wheel button ECU 312, and control the dashboard display 102 to select the Bob list item 907 of a previous fellow member of the Mike list item 908. In this way, the user may control a microphone status and a speaker status of a fellow member Bob corresponding to the Bob list item 907. The intelligent cockpit DCU 24 may control the dashboard display 102 to reduce transparency of the currently selected Bob list item 907 and improve transparency of the Mike list item 908, so that display effect of the selected Bob list item 907 on the dashboard display 102 is more prominent. In this way, the user can learn about a fellow member list item corresponding to a currently selected fellow member. A roll up operation performed by the user on the function operation button 402 shown in FIG. 9D may be the second user operation in this application.

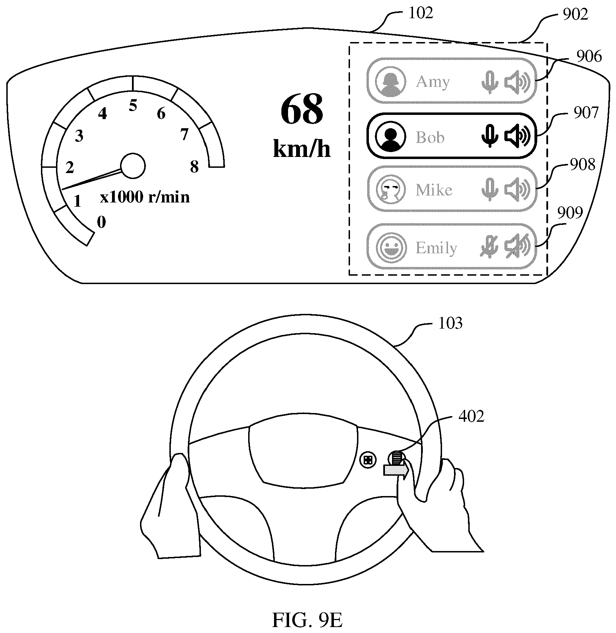

As shown in FIG. 9E, in response to a push right operation performed by the user on the function operation button 402, the intelligent cockpit DCU 24 may receive a button operation instruction sent by the steering wheel button ECU 312, and control the dashboard display 102 to cancel display of slashes in a microphone icon and a speaker icon of the currently selected Bob list item 907, to indicate that the microphone status and the speaker status of the fellow member Bob are in an on state. Correspondingly, the intelligent cockpit DCU 24 may control the T-box 311 to receive voice information from the fellow member Bob, and play the voice information of Bob through a speaker. In addition, the intelligent cockpit DCU 24 may further send, to a device of Bob through the T-box 311, voice information collected by the microphone in the vehicle 100.

When the function operation button 402 is bound to the group travel, for a method for controlling the group travel function in response to a roll down operation and a push left operation performed by the user on the function operation button 402, refer to the descriptions of the roll down operation and the push right operation performed on the function operation button 402. Details are not described herein again.

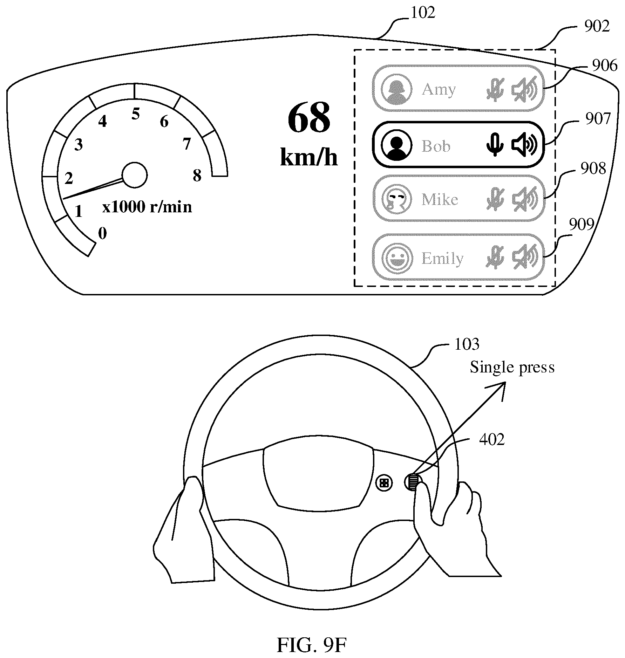

As shown in FIG. 9F, in response to a single press operation performed by the user on the function operation button 402, the intelligent cockpit DCU 24 may receive a button operation instruction sent by the steering wheel button ECU 312. In this way, the intelligent cockpit DCU 24 may control the dashboard display 102 to display the microphone icon and the speaker icon of the currently selected Bob list item 907 in an on state. Correspondingly, the intelligent cockpit DCU 24 may control the dashboard display 102 to display a microphone icon and a speaker icon of another member list item in an off state. For example, the intelligent cockpit DCU 24 may control the dashboard display 102 to display a slash on each of a microphone icon and a speaker icon in the Amy list item 906, the microphone icon and the speaker icon in the Mike list item 908, and a microphone icon and a speaker icon in the Emily list item 909, to indicate that a microphone and a speaker of a member corresponding to a list item are in an off state. The intelligent cockpit DCU 24 may receive the voice information from the Bob device through the T-box 311, and play the voice information of Bob through the speaker. In addition, the intelligent cockpit DCU 24 may send, to a device of Bob through the T-box 311, voice information collected by the microphone in the vehicle 100, and no longer send the voice information to a device of another group member.

In some embodiments, the intelligent cockpit DCU 24 may store a control item binding table of the group travel function. When receiving an operation on the function operation button 402, the intelligent cockpit DCU 24 may search the function operation button binding table shown in Table 7, to search for a cockpit function bound to the function operation button 402. When the intelligent cockpit DCU 24 finds that the function operation button 402 is bound to the group travel function, the intelligent cockpit DCU 24 may query the control item binding table corresponding to the group travel function. Then, the intelligent cockpit DCU 24 may control the group travel function based on a found result.

For example, the control item binding table of the group travel function stored in the intelligent cockpit DCU 24 may be shown in Table 8.

**Table 8**

| Operation manner of the function operation button | Control item of the group travel function |
|---|---|
| Roll up | Select a fellow member forward |
| Roll down | Select a fellow member backward |
| Push left | Turn off a microphone and a speaker of a currently selected fellow member |
| Push right | Turn on the microphone and the speaker of the currently selected fellow member |
| Single press | Turn off a microphone and a speaker of another fellow member and turn on the microphone and the speaker of the currently selected fellow member |

The control item binding table of the group travel function shown in Table 8 may be set by the user on the vehicle-mounted display 101 in the foregoing embodiment. For descriptions of a method for setting the control item binding table of the group travel function, refer to the descriptions in the foregoing embodiments. Details are not described herein again. A storage manner and content shown in Table 8 are merely used as an example for description, and should not be construed as a limitation on embodiments of this application.

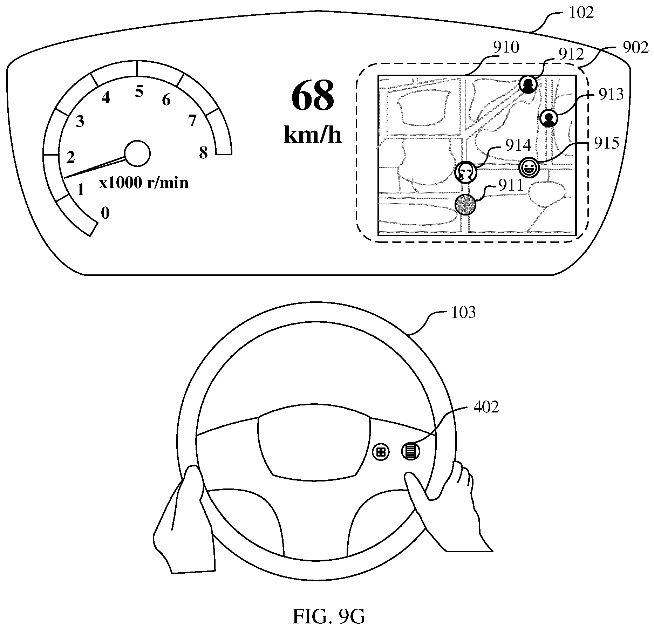

In some embodiments, the intelligent cockpit DCU 24 may store time at which the user operates the function operation button 402. When time away from the time at which the user operates the function operation button 402 is greater than preset waiting time, the intelligent cockpit DCU 24 may control the dashboard display 102 to display function auxiliary information. The function auxiliary information may be another type of cockpit function information. Correspondingly, when receiving an operation performed by the user on the function operation button 402, the intelligent cockpit DCU 24 may control the dashboard display 102 to hide the function auxiliary information and display the cockpit function information, so that the user can operate a current cockpit function. For example, as shown in FIG. 9G, the function auxiliary information of the group travel function may be a navigation map 910, and is used to display information such as surrounding streets and places. The navigation map 910 may include a location identifier 911 of the vehicle 100 and a fellow member profile picture identifier. The location identifier 911 may indicate a location that corresponds to the location of the vehicle 100 on the navigation map 910. The fellow member profile picture identifier may be a profile picture of each fellow member, and indicates a location of each fellow member device. The fellow member profile picture identifier may include a profile picture 912 of Amy, a profile picture 913 of Bob, a profile picture 914 of Mike, and a profile picture 915 of Emily.

The display content of the group travel function auxiliary information is merely used as an example, and is not intended to limit embodiments of this application.

In a possible implementation, when the function operation button 402 is bound to the air conditioner function, function auxiliary information of the air conditioner function may be a current temperature in the cockpit, and the temperature in the cockpit may dynamically change with an actual temperature.

In another possible implementation, when the function operation button 402 is bound to the media playback control function, function auxiliary information of the media playback control function may be an audio signal fluctuation diagram of media being played currently, which progresses with the currently playing progress of the media.

It can be learned that, when the user operates the function operation button 402, the intelligent cockpit DCU 24 may control the dashboard display 102 to display cockpit function information that helps the user perform an operation. In this case, the cockpit function information displayed on the dashboard display 102 may change in response to the operation of the user. However, when the user does not operate the function operation button 402 for a long time, the intelligent cockpit DCU 24 may control the dashboard display 102 to display the function auxiliary information, to help the user learn of a current status of the cockpit function in time. The function auxiliary information displayed on the dashboard display 102 may be dynamic and change in real time based on the status of the cockpit function. In this way, a plurality of display manners may help the user better use increasingly diversified and modern cockpit functions. It may be understood that, for an operation method of another cockpit function, refer to the descriptions of controlling the group travel function by using the function operation button 402. Details are not described herein again.

Each user interface described in embodiments of this application is merely an example interface, and constitutes no limitation on the solutions of this application. In another embodiment, the user interface may use a different interface layout, may include more or fewer controls, and may add or reduce other function options, and provided that the user interface is based on a same inventive idea provided in this application, all fall within the protection scope of this application.

It should be noted that, if no contradiction or conflict occurs, any feature or any part of any feature in any embodiment of this application may be combined, and a combined technical solution also falls within the scope of embodiments of this application.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. A cockpit function control method, wherein the method is applied to a vehicle, the vehicle comprises a steering wheel, a first button and a second button are disposed on the steering wheel, and the method comprises:
binding, by the vehicle, the second button to a first cockpit function in response to a first user operation on the first button;
controlling, by the vehicle, the first cockpit function in response to a second user operation on the second button;
switching, by the vehicle in response to a third user operation on the first button, a cockpit function bound to the second button from the first cockpit function to a second cockpit function; and
controlling, by the vehicle, the second cockpit function in response to a fourth user operation on the second button.

2. The method according to claim 1, wherein the method further comprises:
displaying, by the vehicle, a first list on a display in response to the third user operation, and changing a function option in a selected state in the first list from a first function option to a second function option, wherein the first function option indicates the first cockpit function, and the second function option indicates the second cockpit function; and
displaying, by the vehicle, first information on the display in response to the fourth user operation, wherein the first information indicates content for controlling the second cockpit function.

3. The method according to claim 1 or 2, wherein the controlling, by the vehicle, the second cockpit function in response to a fourth user operation on the second button specifically comprises:
controlling, by the vehicle, a first control item of the second cockpit function in response to the fourth user operation on the second button.

4. The method according to claim 3, wherein the method further comprises:
controlling, by the vehicle, a second control item of the second cockpit function in response to a fifth user operation on the second button, wherein a second operation manner of the fifth user operation is different from a first operation manner of the fourth user operation.

5. The method according to any one of claims 1 to 4, wherein the first button is a single button, and an operation manner of the first button comprises: single press and press and hold; and the second button is a scroll wheel, and an operation manner of the second button comprises: roll up, roll down, push left, push right, and single press.

6. The method according to any one of claims 2 to 5, wherein the display is a dashboard display.

7. The method according to any one of claims 1 to 6, wherein the vehicle comprises a first cockpit function set, the first cockpit function set is used by the vehicle to select, when detecting an operation on the first button, a cockpit function from the first cockpit function set and bind the cockpit function to the second button, and the first cockpit function set comprises the first cockpit function and the second cockpit function.

8. The method according to claim 7, wherein the first cockpit function set does not comprise a third cockpit function, and the method further comprises:
detecting, by the vehicle, a sixth user operation, and adding the third cockpit function to the first cockpit function set.

9. The method according to claim 7 or 8, wherein the method further comprises:
detecting, by the vehicle, a seventh user operation, and deleting the first cockpit function from the first cockpit function set.

10. The method according to claim 7 or 8, wherein cockpit functions comprised in the first cockpit function set are arranged in a first sequence, and the switching, by the vehicle in response to a third user operation on the first button, a cockpit function bound to the second button from the first cockpit function to a second cockpit function specifically comprises:
in response to the third user operation on the first button, switching, by the vehicle in the first sequence starting from the first cockpit function in the first cockpit function set, the cockpit function bound to the second button, and determining that the second button is bound to the second cockpit function.

11. The method according to claim 10, wherein the method further comprises:
detecting, by the vehicle, an eighth user operation, and adjusting the first sequence to a second sequence.

12. The method according to any one of claims 3 to 11, wherein the method further comprises:
detecting, by the vehicle, a ninth user operation, and when the second button is bound to the second cockpit function, switching the first control item bound to the first operation manner of operating the second button to a third control item of the second cockpit function.

13. The method according to claim 12, wherein the second button is bound to the second cockpit function, and the method further comprises:
controlling, by the vehicle, the third control item of the second cockpit function in response to a tenth user operation on the second button, wherein an operation manner of the tenth user operation is the first operation manner.

14. The method according to any one of claims 1 to 13, wherein a cockpit function provided by the vehicle comprises one or more of the following: a media playback control function, an air conditioner function, a shortcut combination function, an audio source switch function, a group travel function, and a quick reply function.

15. A vehicle, wherein the vehicle comprises a display apparatus, a memory, and a processor coupled to the memory, the display apparatus is configured to display an interface, the memory stores computer-executable instructions, and when the processor executes the computer-executable instructions, the vehicle is enabled to implement the method according to any one of claims 1 to 14.

16. A computer-readable storage medium, comprising instructions, wherein when the instructions are run on a vehicle, the vehicle is enabled to perform the method according to any one of claims 1 to 14.
